# EUROPEAN PATENT APPLICATION

(11) **EP 1 729 057 A1**
(43) Date of publication of application: **06.12.2006**
(21) Application number: 06113948.1
(22) Date of filing: 15.05.2006
(51) Int. Cl.: F21V 7/00, G02B 6/00, F21K 7/00, F21V 5/00

(54) **Light emission source and light emission method using light emission source**

(30) Priority: 31.05.2005 JP 2005160763
(71) Applicant: OMRON CORPORATION, Kyoto-shi, Kyoto 600-8530 (JP)
(72) Inventor: Matsui, Akira, KYOTO Kyoto 600-8530 (JP); Kiyomoto, Hironobu, KYOTO Kyoto 600-8530 (JP); Homma, Kenji, KYOTO Kyoto 600-8530 (JP)
(74) Representative: Weihs, Bruno Konrad

(57) **Abstract**

A light emission source comprises a reflector, a first light reflecting surface disposed on the reflector, a light guide disposed on the side of the reflector with the first light reflection surface, and a light emitter for emitting light towards the light guide. The light guide comprises a second light reflection surface disposed facing the first light reflection surface for reflecting some light and transmitting remaining light. The light guide further comprises a light emission surface disposed on an opposite side of the second light reflection surface on the light guide for transmitting light emitted from the light emitter, light reflected by the first light reflection surface, and light reflected by the second light reflection surface.

## Description

### BACKGROUND OF THE INVENTION

### Field of the Invention

The present invention relates to a light emission source apparatus, and a light emission method using the light emission source apparatus. More specifically, the present invention relates to a light emission source apparatus having an LED chip.

### Description of the Background Art

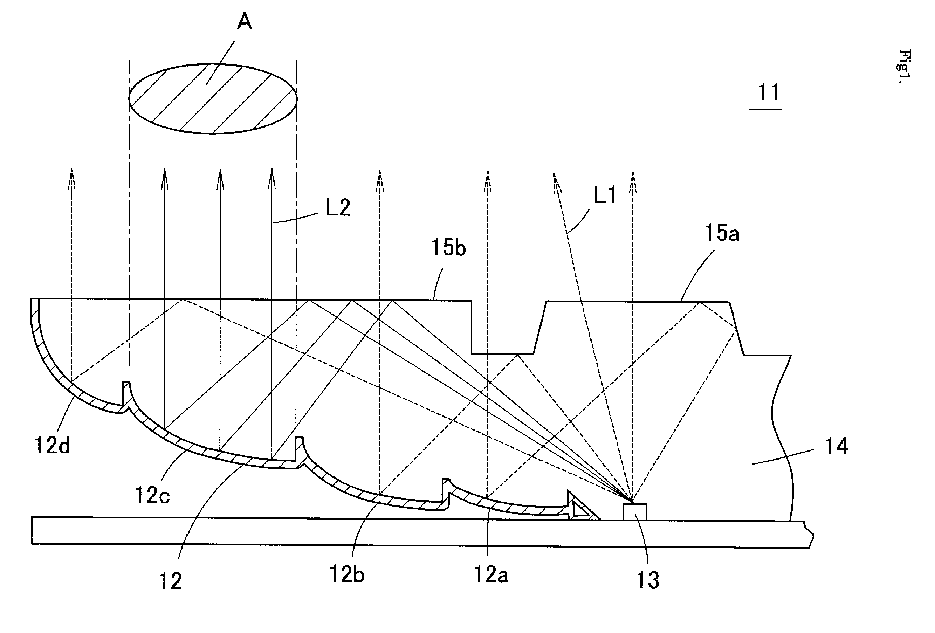

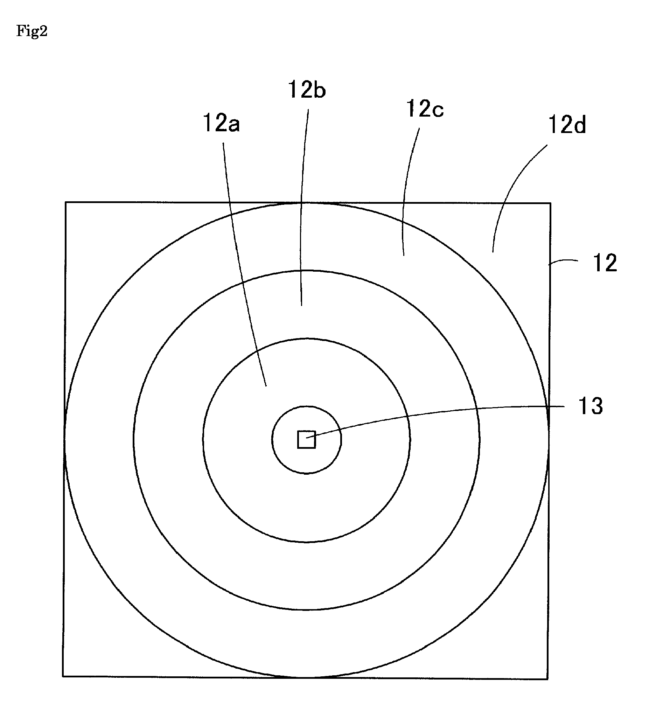

There exist light emission source apparatuses with high light efficiency. One example of such an apparatus can be found in Japanese Patent Application Publication No. 2004-186092. Fig. 1 shows a sectional side view of part of a light emission source apparatus. Light emission source 11 has a white or monochromatic light emitter 13 disposed in the center of the back surface of a mold resin 14 made of transparent resin. A reflector 12 is formed by evaporative deposition of a thin metal film of Al, Au, Ag, or similar metals, on a Fresnel reflection pattern disposed on the back surface of the mold resin 14. Fig. 2 shows a front view of the light emission source 11 with the mold resin 14 removed, showing the light emitter 13 and the reflector 12. The reflector 12 is formed in a Fresnel reflection pattern, and arranged to form a plurality of concentric rings of reflection regions 12a, 12b, 12c, etc.

In this light emission source 11, as illustrated in Fig. 1, of the light emitted from the light emitter 13, light L1 emitted to a central portion ("direct emission region") 15a of a front face of the mold resin 14 passes directly through the direct emission region 15a and is emitted towards the front. Light L2 emitted to a portion ("total reflection region") 15b around the direct emission region 15a, after being totally reflected by the total reflection region 15b, is reflected by the reflector 12, and passes through the total reflection region 15b and is emitted towards the front. In this type of light emission source 11, width A of the light L2 reflected by one of the reflection regions (for example, 12c) is approximately equal to the width of the reflection region (12c).

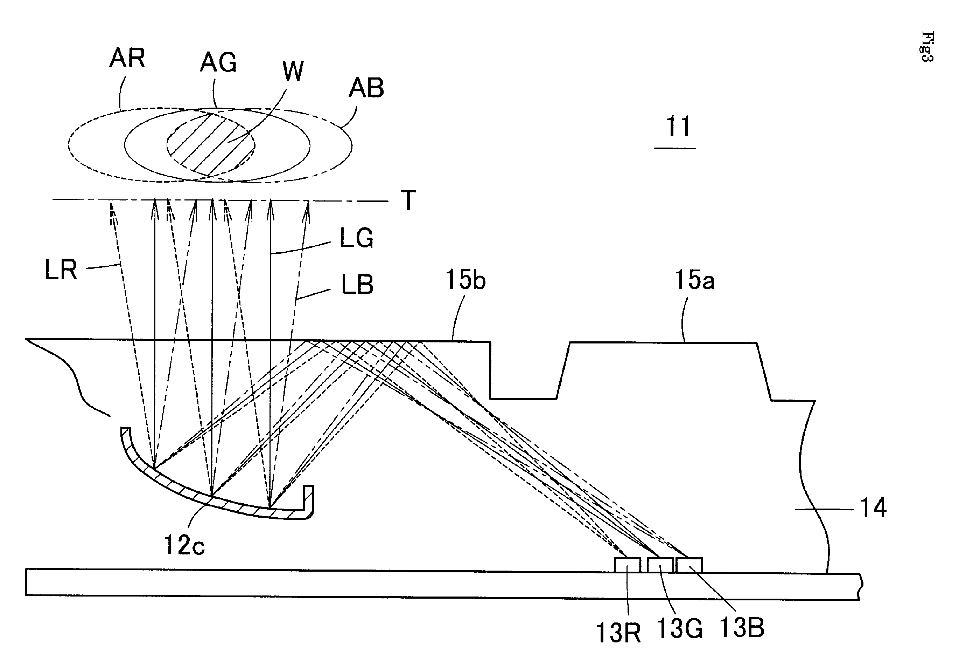

In a backlight for a color liquid crystal display ("LCD"), rather than using white light sources such as a white LED, using a plurality of colored light sources such as a red LED, green LED, and blue LED, allows for better coloration for the three primary colors, and for better color reproducibility. If, for example, a white light source is constructed with three light emitters of emission colors red, green, and blue are disposed in the center of the reflector 12 of the light emission source 11 as described above, each color light can separate, and light inconsistencies can occur in the light emission source 11. The reason for this explained below. Fig. 3 shows the light path for each color in a light emission source 11 having in the center portion red 13R, green 13G, and blue 13B light emitters. For example, in Fig. 3, red light is LR, green light is LG, and blue light is LB, while respective light exposure areas on an illumination plane T, established a fixed distance away from the light emission source 11, is AR for red light LR, AG for green light LG, and AB for blue light LB.

In the case of this light emission source 11, since the position of each light emitter 13R, 13G, 13B is slightly different, the light direction of light reflected by reflection region 12c, after being reflected by the total reflection region 15b, differs for each color, and the light exposure areas AR, AG, AB for each color is also different. As Fig. 3 illustrates, the white light region W is smaller than the reflection region 12c, and in the regions outside of white light region W, the emitted light has coloration, and color inconsistencies.

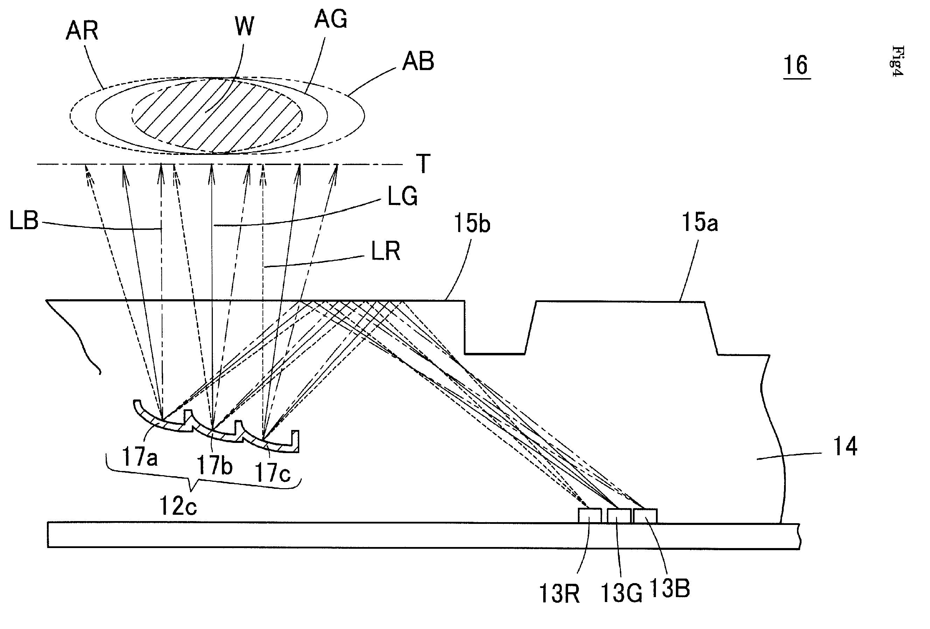

Fig. 4 shows a light emission source 16 where each reflection region 12a, 12b, 12c, etc is split into smaller reflection regions, and where the smaller reflection regions are disposed to accommodate each different colored light. In the light emission source 16, reflection region 12c is split up further into three smaller reflection regions 17a, 17b, 17c. Reflection region 17a is disposed to reflect blue light LB towards a frontal direction, reflection region 17b is disposed to reflect green light LG towards a frontal direction, and reflection region 17c is disposed to reflect red light LR towards a frontal direction, respectively.

As can be seen in Fig. 4, in the light emission source 16, a size of a white light region W formed from an overlap of the colored lights are approximately equal to the total size of reflection regions 17a,17b,17c (that is, the reflection region 12c).

As shown by the example in Fig. 4, even if a plurality of colored light emitters are used, by increasing the number of reflection regions into which the reflector is split, it is possible to decrease color inconsistencies. Further, by increasing the number of reflection regions for a single or a plurality of light emitters, it becomes possible to set precisely a travel direction of the light, improving the degrees of freedom in the light path design. It also makes possible minute adjustments of the light emitting direction, and improves the uniformity of light intensity.

In order to comply with a trend towards decreasing the thickness of apparatuses which include a light emission source (such as an LCD), it has become advantageous to decrease the distance between the light emission source and the liquid crystal panel. Accordingly, it is desirable to have a uniformly lit illumination plane as close as possible to the light emission source, without causing color inconsistencies.

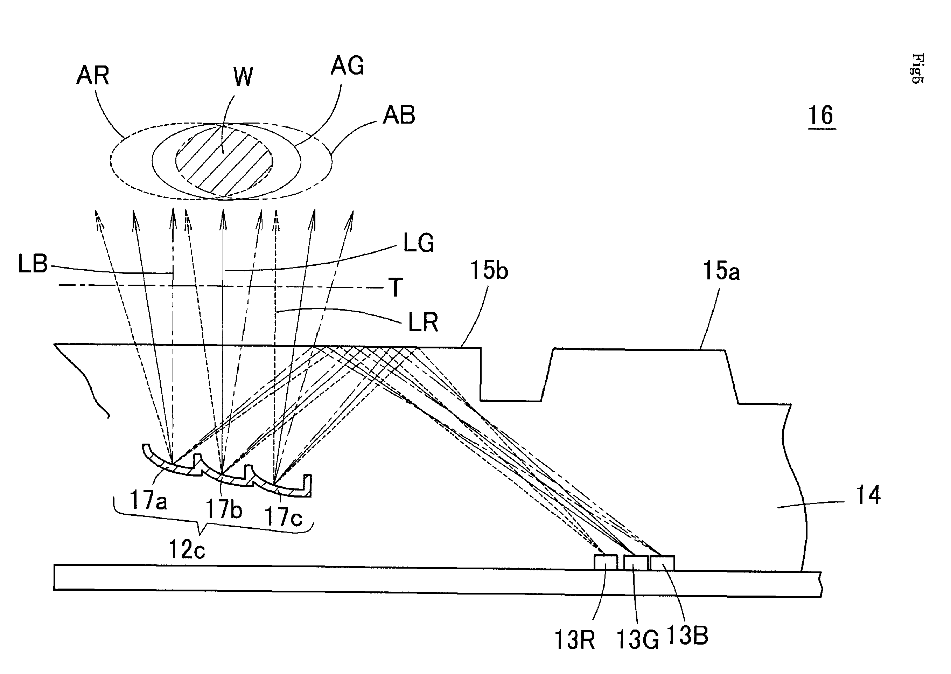

When bringing the illumination plane T of a light emission source 16 like that in Fig. 4 closer to the light emission source 16, as shown in Fig. 5, each color light LR, LG, LB become overlapped, and the white light region W again shrinks compared to reflection region 12C, and color inconsistencies occur.

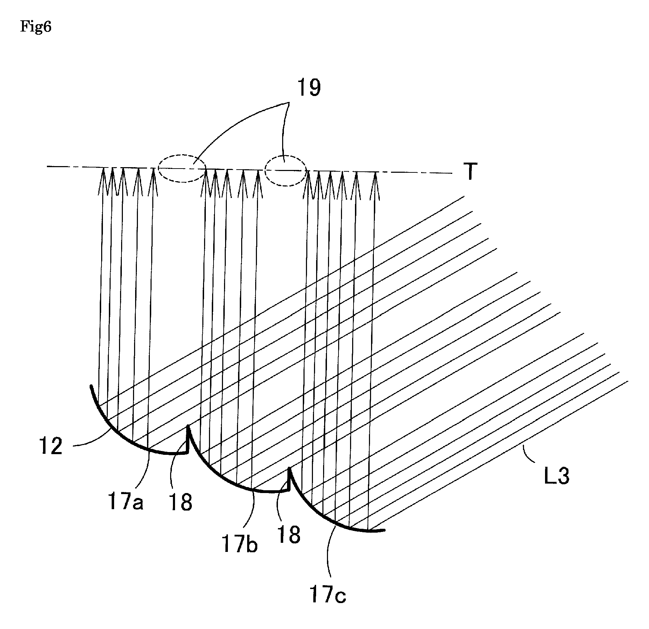

Further, if the illumination plane is brought nearer to the light emission source and the distance between the illumination plane and the light emission source becomes extremely small, as shown in Fig. 6, brightness inconsistencies due to steps 18 formed between the reflection regions of the reflector 12 becomes significant. In other words, because in a reflector 12 having a Fresnel reflection pattern, steps 18 are formed between each pair of adjacent reflection regions, each reflection region has a region in the shade of the steps 18 where light L3 is not incident thereon. Thus, when the illumination plane is brought nearer to the light emission source, this region throws shade onto the illumination plane T and a dark region 19 forms, and the light reflection surface pattern is projected onto the illumination plane T.

As in this case, in a method of reducing color and brightness inconsistencies upon the illumination plane by dividing further the reflection regions of the reflector, as the illumination plane is brought nearer to the light emission source, the reflection regions of the reflector must be miniaturized, and the production of the reflector becomes difficult and expensive. Therefore, if the illumination is brought closer to the light emission source, the number of partitions in the reflector gradually gets large, and balancing performance improvement and cost of the light emission source becomes difficult. Further, in the method of miniaturizing the reflection regions of the reflector, the number of steps increases, and the light reflection surface pattern projected upon the illumination plane can worsen.

Although the formation of color inconsistencies was explained with respect to a plurality of colored light emitters, even in a light emission source employing a single colored or a single light emitter, brightness inconsistencies become significant as the illumination plane is brought closer to the light emission source, for the same reasons.

### SUMMARY OF THE INVENTION

In general, in one aspect, the invention relates to a light emission source having a reflector, a first light reflecting surface disposed on the reflector, a light guide disposed on the side of the reflector with the first light reflection surface, and a light emitter for emitting light towards the light guide, wherein the light guide has a second light reflection surface disposed facing the first light reflection surface for reflecting some light and transmitting remaining light, and a light emission surface disposed on an opposite side of the second light reflection surface on the light guide for transmitting light emitted from the light emitter, light reflected by the first light reflection surface, and light reflected by the second light reflection surface.

In general, in one aspect, the invention relates to a light emission source having a light guide, wherein the light guide has a light emitter, a first light reflection surface for reflecting light emitted from the light emitter, and a light emission surface for transmitting light emitted from the light emitter, and light reflected by the first light reflection surface, wherein the first light reflection surface comprises two types of reflection surfaces, the two types of reflection surfaces comprising a partial reflection surface for reflecting some light and transmitting remaining light, and a high reflectance reflection surface for reflecting nearly all light.

In general, in one aspect, the invention relates to a light emission method using a light emission source, the light emission source having a reflector, a light guide disposed on a reflective side of the reflector, and a light emitter for emitting light towards the light guide, wherein a surface of the light guide facing the reflector reflects some of the light emitted by the light emitter, and transmits the remaining light, a light reflection surface on the reflector reflects the light transmitted through the light guide, and the light emitted by the light emitter, the light reflected by the surface of the light guide facing the reflector, and the light reflected by the light reflection surface on the reflector are emitted towards the outside of the light emission source.

### BRIEF DESCRPTION OF DRAWINGS

Fig. 1 shows a partial cross-sectional side view of a conventional light emission source apparatus.
Fig. 2 is a front view of a conventional light emission source with the light guide removed, showing the light emitter and the reflector.
Fig. 3 is a partial cross-sectional view of a conventional light emission source with red, green, and blue light emitters, showing the light path of each color light, and how each color spreads upon a set illumination plane.
Fig. 4 is a partial cross-sectional view of a conventional light emission source as shown in Fig. 3, but with the reflection regions divided into smaller partitions, showing the light path of each color light, and how each color spreads upon a set illumination plane.
Fig. 5 is a partial cross-sectional view of a conventional light emission source as shown in Fig. 4, but with the illumination plane set nearer, showing how each color spreads upon a set illumination plane.
Fig. 6 shows an explanatory view of a conventional light emission source as shown in Fig. 4.
Fig. 7 shows an explanatory view of a conventional light emission source as shown in Fig. 4.
Fig. 8 shows a perspective view of the outside of a light emission source according to a first embodiment of the invention.
Fig. 9 shows a perspective view of a light emission source according to a first embodiment of the invention.
Fig. 10 shows a perspective view of a disassembled light emission source according to a first embodiment of the invention.
Figs. 11A, 11B, 11C, 11D respectively show a front view, a back view, a top view, and a side view of the light emission source according to a first embodiment of the invention.
Fig. 12A shows a front perspective view of the light guide, and Fig. 12B shows a back perspective view of the light guide according to a first embodiment of the invention.
Figs. 13A, 13B, 13C, and 13D respectively show a front view, a back view, a top view, and a side view of the light guide according to a first embodiment of the invention.
Fig. 14 shows a front perspective view of the reflector according to a first embodiment of the invention.
Figs. 15A, 15B, 15C, and 15D respectively show a front view, a back view, a top view, and a side view of the reflector according to a first embodiment of the invention.
Fig. 16A shows a view in the X-X direction with respect to Fig. 15A, and Fig. 16B shows a view in the Y-Y direction with respect to Fig. 15A, of the reflector according to a first embodiment of the invention.
Fig. 17 shows a cross-sectional view of typical behavior of light in a light emission source according to one or more embodiments of the present invention.
Fig. 18 shows an explanatory functional view of the light emission source according to one or more embodiments of the present invention.
Fig. 19 shows an explanatory view showing the reason the light reflection surface of the light guide and the light reflection surface of the reflector have identical patterns, but reflect light in different directions, according to one or more embodiments of the present invention.
Fig. 20 shows an explanatory functional view of the light emission source according to one or more embodiments of the present invention.
Fig. 21 is a diagonal cross-section view showing light beams emitted from the light emitters that are directly emitted from the light emission light source.
Fig. 22 shows the distribution of optical intensity of the directly emitted light upon an illumination plane set a predetermined distance from the light emission source.
Fig. 23 is a diagonal cross-section view showing light beams that are regularly reflected by the light reflection surface of the reflector, then emitted from the light emission light source.
Fig. 24 shows the distribution of optical intensity of the regularly reflected light upon an illumination plane set a predetermined distance from the light emission source.
Fig. 25 is a diagonal cross-section view showing light beams being Fresnel reflected by the light reflection surface of the light guide, then emitted from the light emission light source.
Fig. 26 shows the distribution of optical intensity of the Fresnel reflected light upon an illumination plane set a predetermined distance from the light emission source.
Fig. 27 shows the result of combining the optical intensity distributions of Figs. 22, 24, and 26.
Fig. 28 shows the result of combining the optical intensity distributions of Figs. 22 and 24.
Fig. 29 is a side cross-section view showing light that is regularly reflected by the light reflection surface of the reflector and light that is Fresnel reflected by the light reflection surface of the light guide.
Fig. 30 shows a side cross-section view of a conventional light reflection source, showing light that is regularly reflected.
Fig. 31 shows the distribution of optical intensity of light shown in Fig. 29 upon an illumination plane set a predetermined distance from the light emission source.
Fig. 32 shows the simulation results of the light emission characteristics when two light emitting sources are lined up in the diagonal direction.
Fig. 33 shows the simulation results of the light emission characteristics when two light emitting sources are lined up in the diagonal direction.
Fig. 34 shows a perspective view of a light emission source according to a second embodiment of the invention.
Fig. 35 shows a perspective view of a disassembled light emission source according to a second embodiment of the invention.
Fig. 36 shows a cross-sectional view of the light emission source according to a second embodiment of the invention.
Fig. 37 shows an alternate embodiment of the light emission source of the second embodiment of the invention.
Fig. 38 shows a perspective view of a light emission source according to a third embodiment of the invention.
Figs. 39A, 39B, 39C, and 39D respectively show a front view, a back view, a top view, and a side view of the light emission source according to a third embodiment of the invention.
Fig. 40 shows a cross-sectional view of the light emission source according to a third embodiment of the invention.
Fig. 41 shows a front view of the reflector.
Fig. 42 shows a perspective view of a light emission source according to a fourth embodiment of the present invention.
Figs. 43A, 43B, 43C, and 43D respectively show a front view, a back view, a top view, and a side view of the light emission source according to a fourth embodiment of the invention.
Fig. 44 shows a back perspective view of a light guide according to a fourth embodiment of the invention.
Figs. 45A, 45B, 45C, and 45D respectively show a front view, a back view, a top view, and a side view of the light guide according to a fourth embodiment of the invention.
Fig. 46 shows a perspective view of a reflector according to a fourth embodiment of the invention.
Figs. 47A, 47B, 47C, and 47D respectively show a front view, a back view, a top view, and a side view of the reflector according to a fourth embodiment of the invention.
Fig. 48 shows a cross-sectional view of the reflector according to a fourth embodiment of the invention.
Fig. 49 shows a perspective view of a light emission source according to a fifth embodiment of the invention.
Figs. 50A, 50B, 50C, and 50D respectively show a front view, a back view, a top view, and a side view of the light emission source according to a fifth embodiment of the invention.
Figs. 51A and 51B respectively show front and back perspective views of a light guide according to a fifth embodiment of the invention.
Figs. 52A, 52B, 52C, and 52D respectively show a front view, a back view, a top view, and a side view of the light guide according to a fifth embodiment of the invention.
Fig. 53 shows a perspective view of a reflector according to a fifth embodiment of the invention.
Figs. 54A, 54B, 54C, and 54D respectively show a front view, a back view, a top view, and a side view of the reflector according to a fifth embodiment of the invention.
Fig. 55 shows a cross-sectional view of the reflector according to a fifth embodiment of the invention.
Fig. 56 shows a perspective view of a light emission source array according to a sixth embodiment of the invention.
Fig. 57 shows a schematic cross-sectional view of the structure of a liquid crystal display according to a seventh embodiment of the invention.

### DETAILED DESCRIPTION

Exemplary embodiments of the invention will be described with reference to the accompanying figures. Like items in the figures are shown with the same reference numbers.

In embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid obscuring the invention.

Embodiments of the invention relate to a light emission source apparatus, and a light emission method using the light emission source apparatus. More specifically, one or more embodiments of the invention relate to a light emission source apparatus having an LED chip.

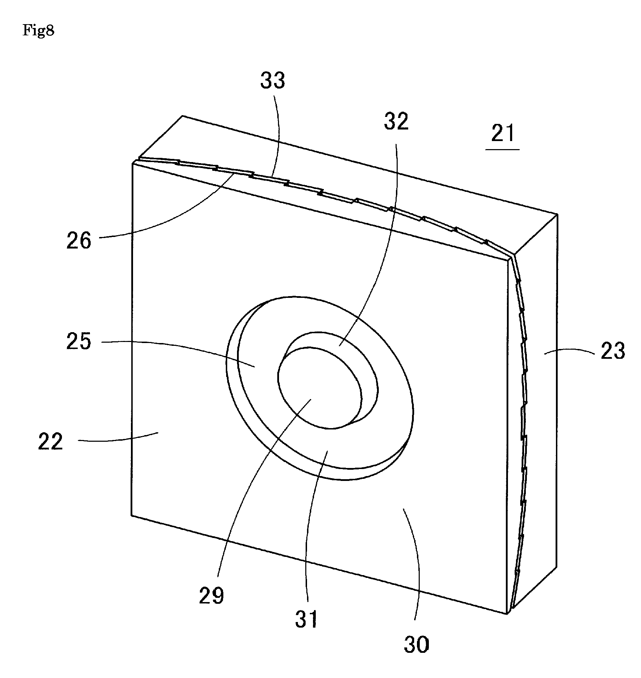

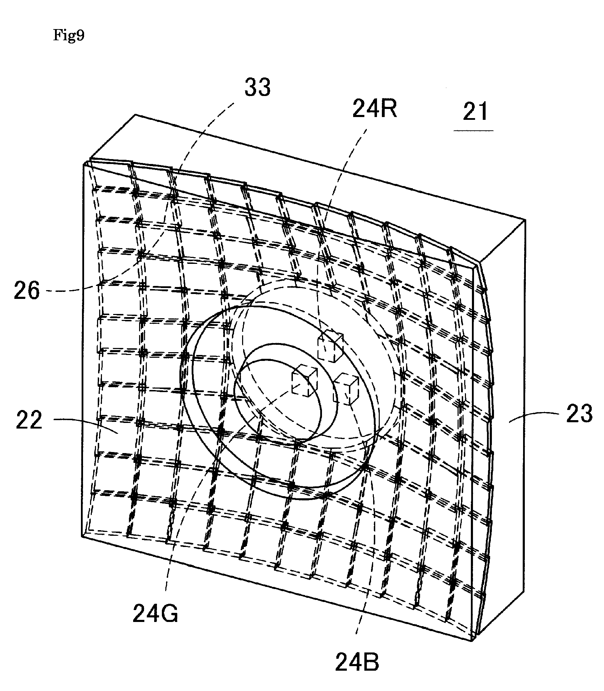

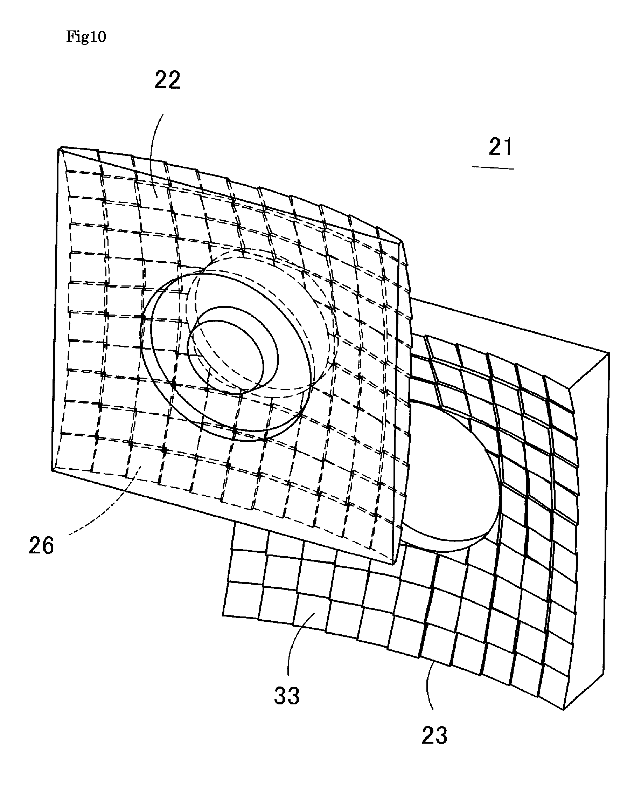

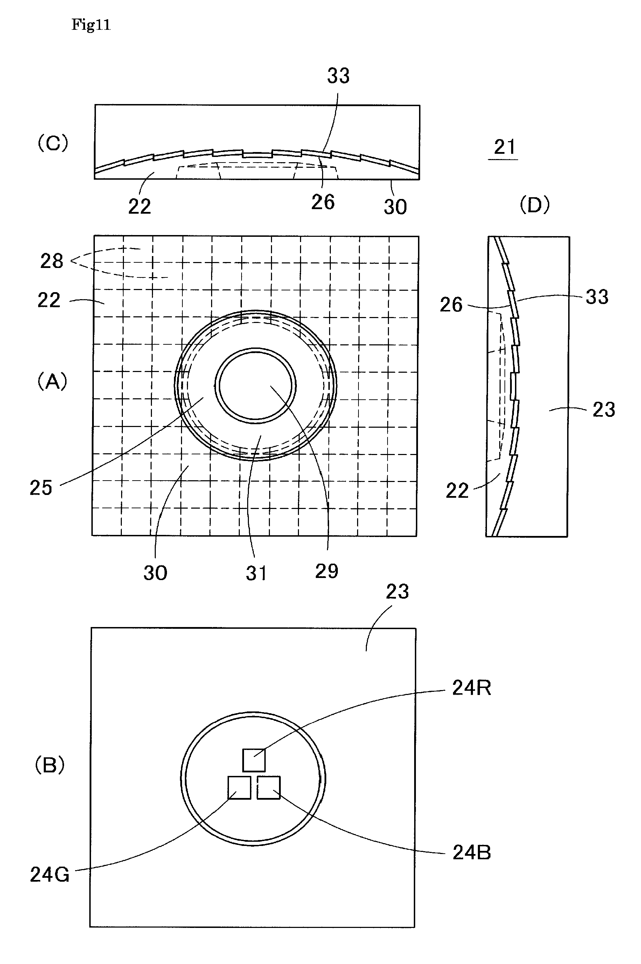

Fig. 8 shows a perspective view of the outside of a light emission source 21 according to a first embodiment of the invention. Fig. 9 shows a perspective view of the light emission source 21. Fig. 10 shows a perspective view of a disassembled light emission source 21. Figs. 11A, 11B, 11C, and 11D respectively show a front view, a back view, a top view, and a side view of the light emission source 21. The light emission source 21 in Figs. 8-11 comprises a light guide 22, reflector 23, and light emitters 24R, 24G, and 24B.

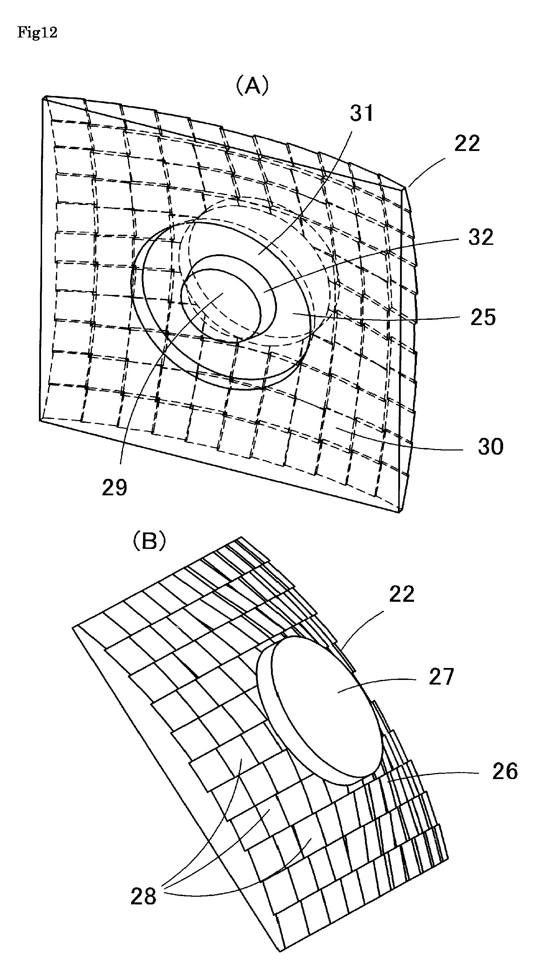

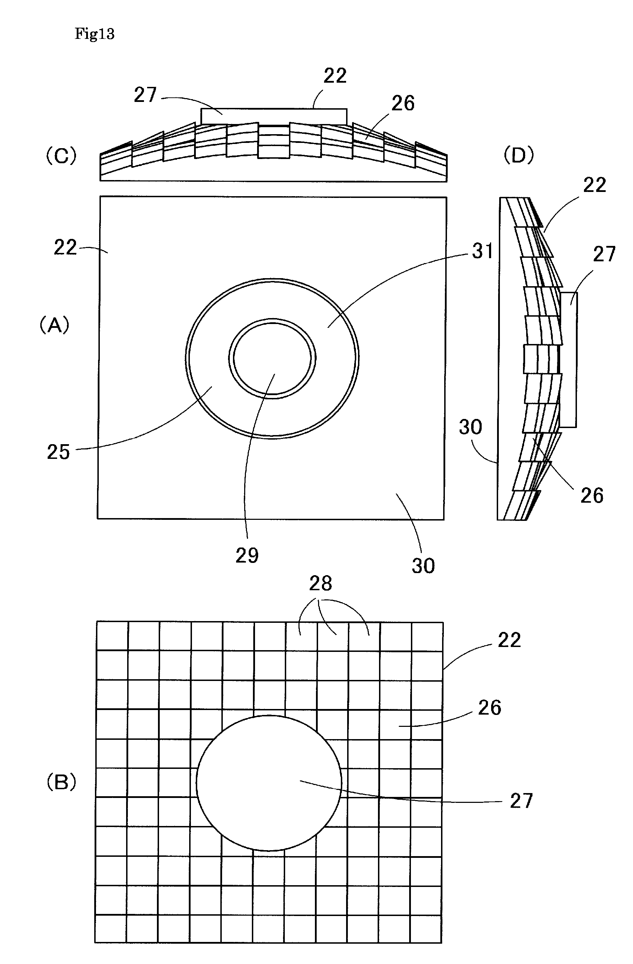

Fig. 12A shows a front perspective view of the light guide 22, and Fig. 12B shows a back perspective view of the light guide 22. Figs. 13A, 13B, 13C, and 13D respectively show a front view, a back view, a top view, and a side view of the light guide 22. The light guide 22 is formed from an optically transparent material with high refractive index, in a plate-like shape. The optically transparent material from which the light guide 22 is formed may be a transparent resin such as epoxy resin, or acrylic resin, a glass material, or another optically transparent material known in the art.

As can be seen in Fig. 8 or 12A, the light guide 22, when viewed from the front, is rectangular. In the central area of the front face of the light guide 22, a circular direct emission region 29 is disposed. On the outside of the direct emission region 29, through an annular groove 25, is disposed a total reflection region 30. The direct emission region 29 is a flat, circular region formed in a plane perpendicular to the center axis of the light guide 22. The total reflection region 30 is a flat region that is also formed in a plane perpendicular to the center axis of the light guide 22. In the embodiment shown in these Figs., the direct emission region 29 and the total reflection region 30 are formed within the same plane, and the direct emission region 29 is placed at the same height as the total reflection region 30. However, in one or more embodiments, the direct emission region 29 may protrude further than the total reflection region 30 in the groove 25, and thus the direct emission region 29 may be higher than the total reflection region 30. Alternatively, in one or more embodiments, the direct emission region 29 may be lower than the total reflection region 30. Furthermore, a primary function of the direct emission region 29 is transmitting light from the light emitters 24R, 24G, 24B directly through to the outside, but the direct emission region 29 may also have the function of totally reflecting incident light. Similarly, a primary function of the total reflection region 30 is totally reflecting incident light towards the reflector 26, but the total reflection region 30 could also have the function of transmitting incident light to the outside.

An annular groove 25 is disposed between the direct emission region 29 and the total reflection region 30, and another total reflection region 31 is formed on an annular plane on the bottom surface of the groove 25. Furthermore, on a side wall of an inner circumference of the groove 25 is disposed a slanted total reflection region 32. The slanted total reflection region 32 is disposed on a tapered truncated cone, such that its diameter decreases as it approaches the front face of the light guide 22. Although the total reflection region 31 and the slanted total reflection region 32 both have a primary function of totally reflecting incident light, part of the incident light may also pass through the slanted total reflection region 32 to be emitted outside.

As shown in Figs. 12B and 13C, a back face of the light guide 22 is curved, and a cylindrical protrusion 27 is disposed on a central area thereof. A light reflection surface 26, for reflecting partially the light totally reflected by the total reflection region 30 on the front face of the light guide 22 and transmitting the remaining light, is disposed on the back face of the light guide 22 except for the region covered by the protrusion 27. The light reflection surface 26 serves as an interface between the light guide 22 and the outside air, and thus a particularly optical film may not be necessary for the light reflection surface 26. Because the refraction index of the light guide 22 is sufficiently large compared with the refraction index of air, when light is incident on the interface (light reflection surface 26), part of the incident light is Fresnel reflected, and the remaining light is transmitted. Alternatively, depending on the angle of the incident light, all of the incident light may be totally reflected.

As shown in Fig. 12, the light reflection surface 26 of the light guide 22 is split into a plurality of reflection regions 28 which is arranged along at least two directions in a square pattern. Further, in order to minimize the thickness of the light guide 22, the light reflection surface 26 is a Fresnel reflection surface, and a step is formed between each of the plurality of reflection regions 28. Because the light reflection surface 26 is split into the plurality of reflection regions 28 in two directions, the number of partitions forming the plurality of reflection regions 28 can be increased, and surface curvature and inclination of each of the plurality of reflection regions 28 can be controlled. Thereby, the light rays emitted from the light guide 22 can be designed in detail. In one or more embodiments, the light reflection surface 26 of the light guide 22 may be slightly rough, causing light to be diffused.

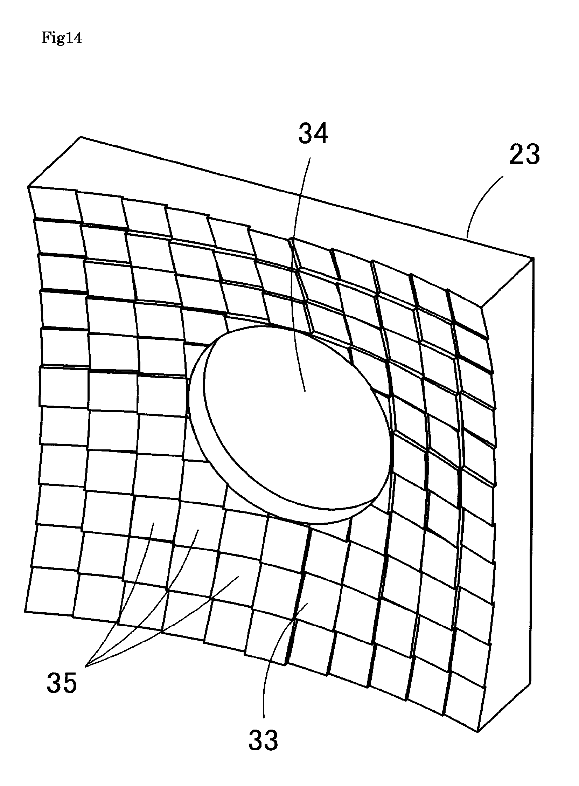

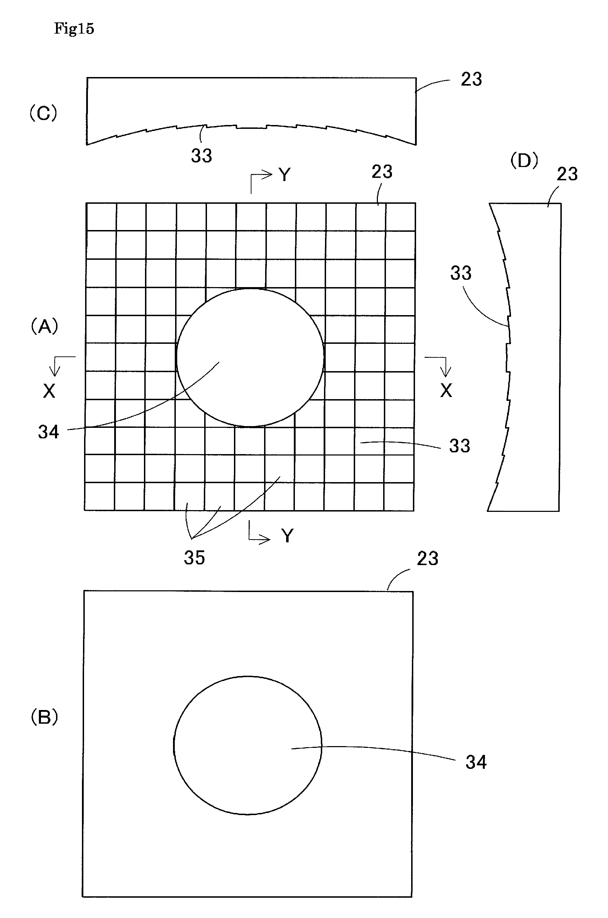

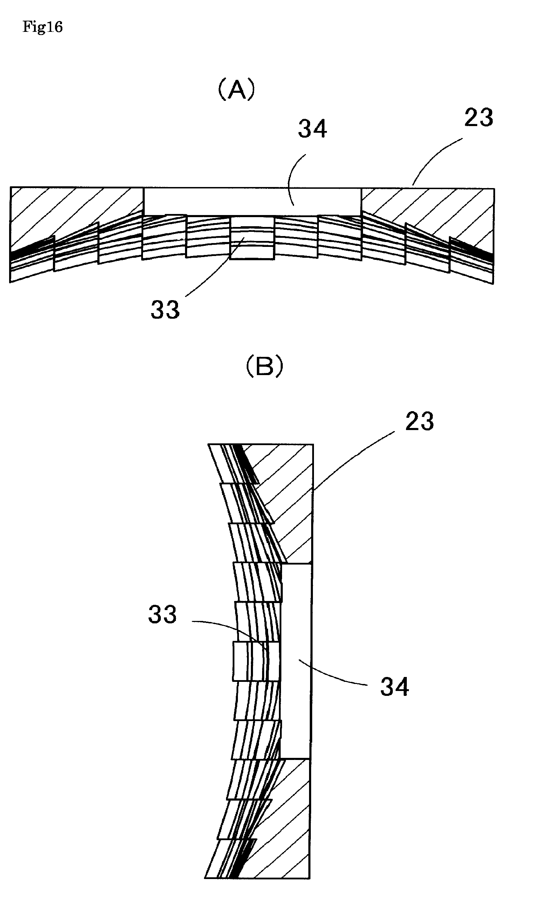

Fig. 14 shows a front perspective view of the reflector 23. Figs. 15A, 15B, 15C, and 15D respectively show a front view, a back view, a top view, and a side view of the reflector 23. Fig. 16A shows a view in the X-X direction with respect to Fig. 15A, and Fig. 16B shows a view in the Y-Y direction with respect to Fig. 15A. The front face of reflector 23 is concave and curved into a plate-like shape, and in the central area thereof is disposed a round through-hole 34. The curved surface of the front face of the reflector 23 is formed with a high reflectance and is thus a light reflection surface 33 able to regularly reflect or diffusedly reflect incident light. High reflectance characteristics in the light reflection surface 33 may be achieved by forming the reflector 23 from highly reflective resin (for example, reflectance of at least 95%), metals such as aluminum, or another highly reflective material known in the art, then smoothing the light reflection surface 33. Alternatively, the front surface of a reflector 23 could be coated with a thin metal film through evaporative deposition. The light reflection surface 33 of the reflector 23 may have some diffusion characteristics.

Light reflection surface 33 of the reflector 23 has the same pattern as the light reflection surface 26 of the light guide 22. In other words, the light reflection surface 33 is split into a plurality of reflection regions 35 which is arranged along at least two directions in a checker board pattern. Further, in order to minimize the thickness of the reflector 23, the light reflection surface 33 is a Fresnel reflection surface, and a step is formed between each of the plurality of reflection regions 35. The light reflection surface 26 of the light guide 22 and the light reflection surface 33 of the reflector 23 have identical patterns and positions for the plurality of reflection regions 28, 35.

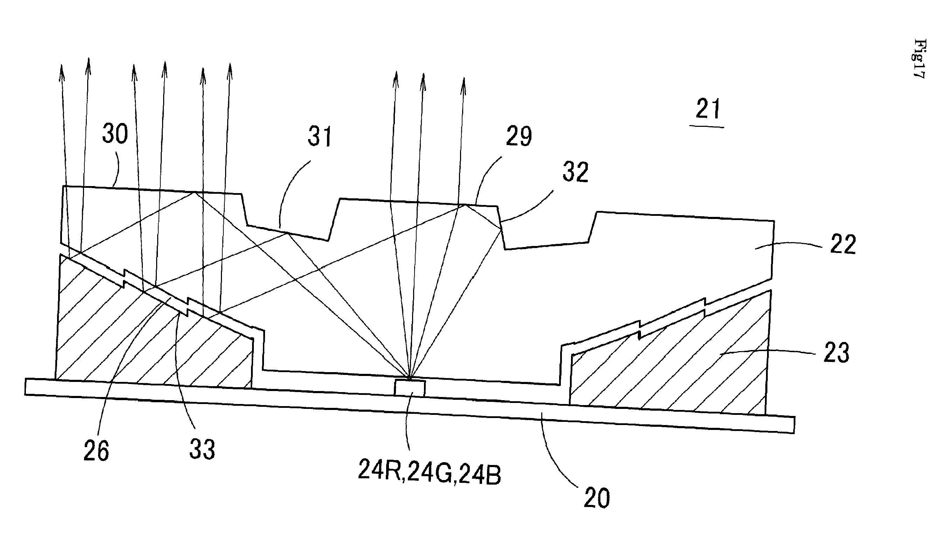

As shown in Fig. 9 and Fig. 17, the light guide 22 and the reflector 23 are arranged such that the back face of the light guide 22 (light reflection surface 26) and the front face of the reflector 23 (light reflection surface 33) are disposed opposed to each other, with a minute gap in between. The space between the light guide 22 and the reflector 23 acts as an air layer. Because the thickness of the air layer is large compared to wavelength of light, some of the light incident on the light reflection surface 26 may be Fresnel reflected while the remaining light is transmitted, or depending on the incidence angle, may be totally reflected.

By assembling the light guide 22 and the reflector 23, and assembling the light emission source 21 as described above, each of the plurality of reflection regions 28 of the light refection surface 26 of the light guide 22 are disposed oppositely facing each of the plurality of corresponding reflection regions 35 of the light reflection surface 33 of the reflector 23, maintaining a uniform distance therebetween. Further, the corresponding steps also oppositely face each other.

Fig. 17 shows a cross-sectional view, from a direction parallel to the side, of typical behavior of light emitted from light emitters 24R, 24G, 24B in a light emission source 21 according to one or more embodiments of the present invention. In the figures, light is shown a thin line with an arrow. For example, LED comprising red, green, and blue light emitters 24R, 24G, 24B are disposed in the center area of the back face of the light guide 22. More specifically, each of the light emitters 24R, 24G, 24B are mounted on top of the wire board 20, and the assembled light guide 22 and the reflector 23 are attached, surrounding the light emitters 24R, 24G, 24B, onto the wire board 20 via an adhesive.

When the red, green, and blue light emitters 24R, 24G, 24B disposed on the center portion of the light emission source 21 emits light, of the light emitted thereby, the light having an emission angle less than critical angle of total reflection of the boundary of the light guide 22 is incident on the direct emission region 29. This light is then transmitted directly through the direct emission region 29, and thereby emitted from the light emission source 21 in the frontal direction.

Some of the light emitted at an emission angle greater than the critical angle of total reflection is incident on the total reflection region 31, and by being totally reflected by the total reflection region 31, the light is incident on the light reflection surface 26 of the light guide 22. Some of the light incident on the light reflection surface 26 is Fresnel reflected by the light reflection surface 26, and the light reflected by the light reflection surface 26 is transmitted through the total reflection region 30 and emitted in the frontal direction. The light transmitted through the light reflection surface 26 is reflected by the light reflection surface 33 of the reflector 23, and is transmitted through the total reflection region 30 and emitted in the frontal direction.

Some of the light emitted at an emission angle greater than the critical angle of total reflection is incident on the total reflection region 30, and by being totally reflected by the total reflection region 30, the light is incident on the light reflection surface 26. Some of the light incident on the light reflection surface 26 is Fresnel reflected by the light reflection surface 26, and the light reflected by the light reflection surface 26 is transmitted through the total reflection region 30 and emitted in the frontal direction. The light transmitted through the light reflection surface 26 is reflected by the light reflection surface 33 of the reflector 23, and is transmitted through the total reflection region 30 and emitted in the frontal direction.

Light emitted by the light emitters 24R, 24G, 24B having an emission angle between the emission angle for the direct emission region 29 and the emission angle for the total reflection region is incident on the slanted total reflection region 32, and after being totally reflected twice by the slanted total reflection region 32 and the direct emission region 29, is incident on the reflection region 36. Some of the light incident on the light reflection surface 26 is Fresnel reflected by the light reflection surface 26, and the light reflected by the light reflection surface 26 is transmitted through the total reflection region 30 and emitted in the frontal direction. The light transmitted through the light reflection surface 26 is reflected by the light reflection surface 33 of the reflector 23, and is transmitted through the total reflection region 30 and emitted in the frontal direction.

Because light is incident on the light reflection surface 26 at a large incident angle at the corner portions of the light emission source 21, for this portion the light incident on the light reflection surface 26 of the light guide 22 may be totally reflected by the light reflection surface 26 and transmitted emitted in the frontal direction through the total reflection region 30.

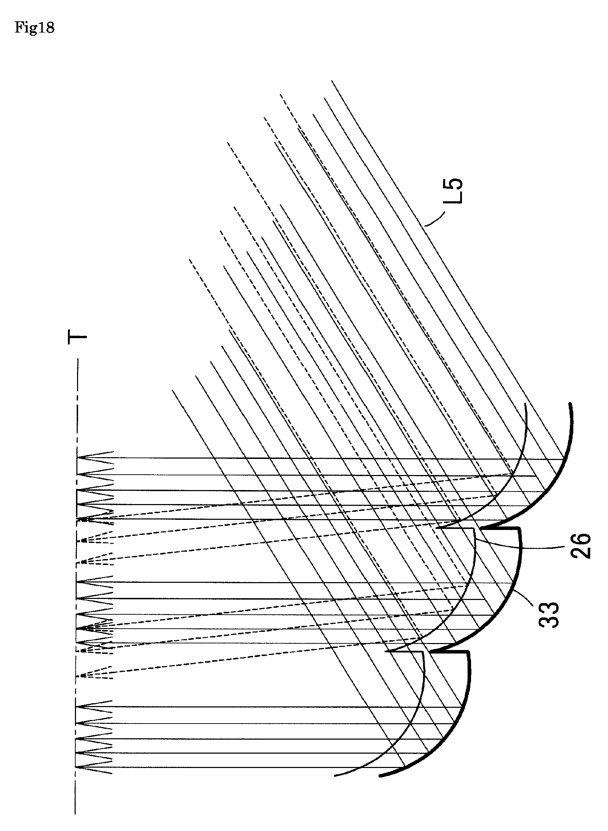

As explained in the background section, in conventional light emission sources, when the illumination plane T gets close to the light emission source, color inconsistencies and brightness inconsistencies becomes noticeable. Further, with reflectors having Fresnel reflection patterns, because there are steps between light reflection regions, there are regions where light cannot reach due to shades of the steps, causing a pattern of the light reflection surface to be projected onto the illumination plane. As shown in Fig. 18, in a light emission source 21 according to one or more embodiments of the invention, the light reflection surface 26 of the light guide 22 and the light reflection surface 33 of the reflector 23 are able to reflect in different directions light L5 coming from a certain direction. Thus, an advantage of one or more embodiments of the present invention is that by overlapping the light reflected by two layers of light reflection surfaces, the occurrence of color and brightness inconsistencies at illumination plane T can be reduced, and uniform illumination can be achieved. A further advantage of one or more embodiments of the present invention is that the pattern of the light reflecting surface can be prevented from being projected onto the illumination plane.

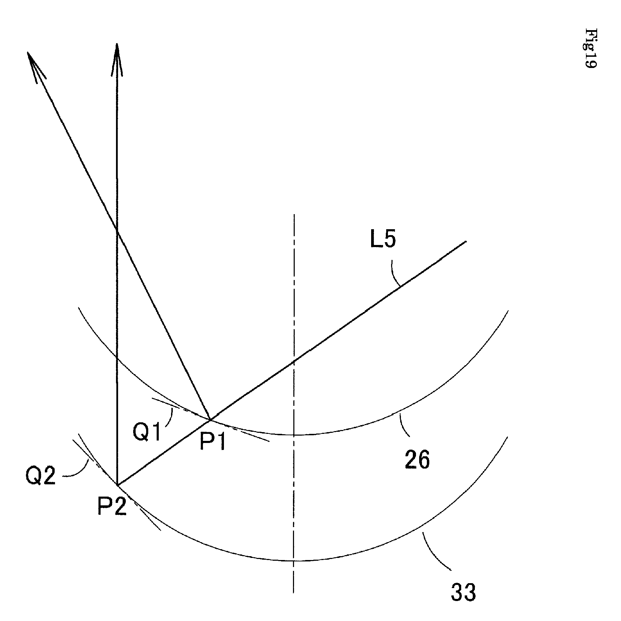

Fig. 19 explains how the light reflecting surface 26 of the light guide 22 and the light reflecting surface 33 of the reflector 23, which have the same shape, can have different light reflection directions. As can be seen from Fig. 19, when the light reflecting surface 26 of the light guide 22 and the light reflecting surface 33 of the reflector 23 are each concavely aspheric or spherical surfaces, even if the light L5 is incident from the same direction, incident point P1 on the light reflection surface 26 of the light guide 22 is positioned more inwards than incident point P2 on the light reflection surface 33 of the reflector 23. Slope of tangent plane Q1 tangent to the light reflection surface 26 about the incident point P1 is less than slope of tangent plane Q2 tangent to the light reflection surface 33 about the incident point P2, light reflected by the light reflection surface 26 of the light guide 22 spreads more outward than the light reflected by the light reflection surface 33 of the reflector 23.

Therefore, by designing the light reflection surface 33 of the reflector 23 to have the desired reflection characteristics, having the same pattern disposed in the front (in other words, on the back surface of light guide 22), reflected light can be scattered. Thus, light can be supplied to parts where light from light reflection surface 33 of the reflector 23 is not sufficient, and color inconsistencies, brightness inconsistencies, and dark regions that may occur at the steps of the light emission source 21 could be prevented.

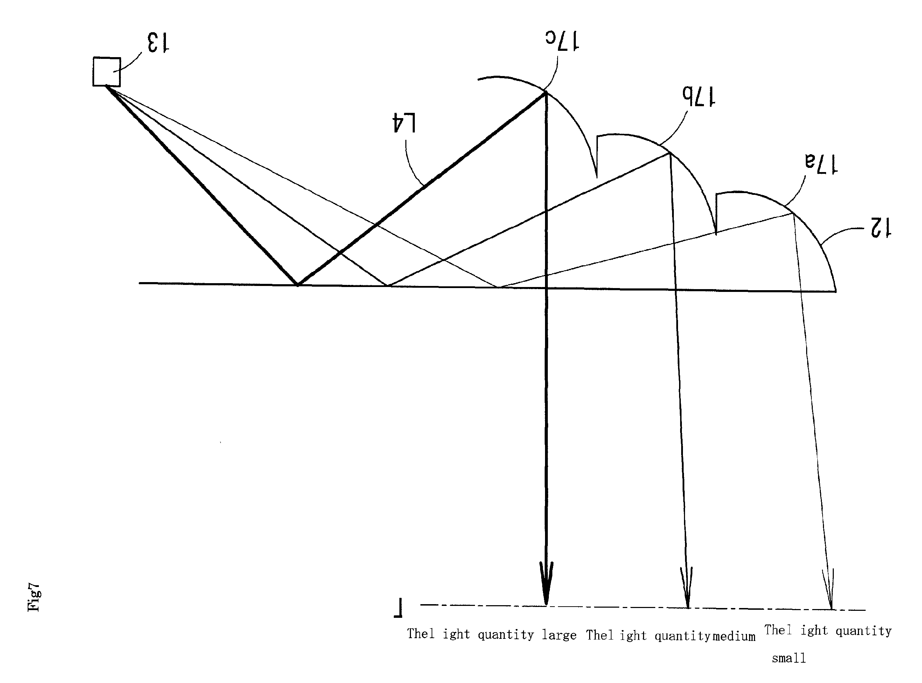

Further, as shown in Fig. 7, in conventional light emission sources, at reflection regions 17a far from the light emitter 13, the optical path length is longer, and accordingly the light quantity of incident light is smaller. However, the reflectance of the reflection regions is uniform. Thus, in reflection regions 17a positioned farther from the center, the light quantity of the reflected light is smaller compared to reflection regions 17c positioned closer to the center, and the brightness may become inconsistent.

In a light emission source according to one or more embodiments of the present invention, the reflectance of the light reflection surface 33 of the reflector 23, for each of the reflection regions, is 80-90%. Further, the reflectance of the light reflected by the light reflection surface 26 of the light guide 22 is only several % of the incident light quantity near light emitters 24R, 24G, 24B, but further from the light emitters 24R, 24G, 24B, approaches 100% due to total reflection.

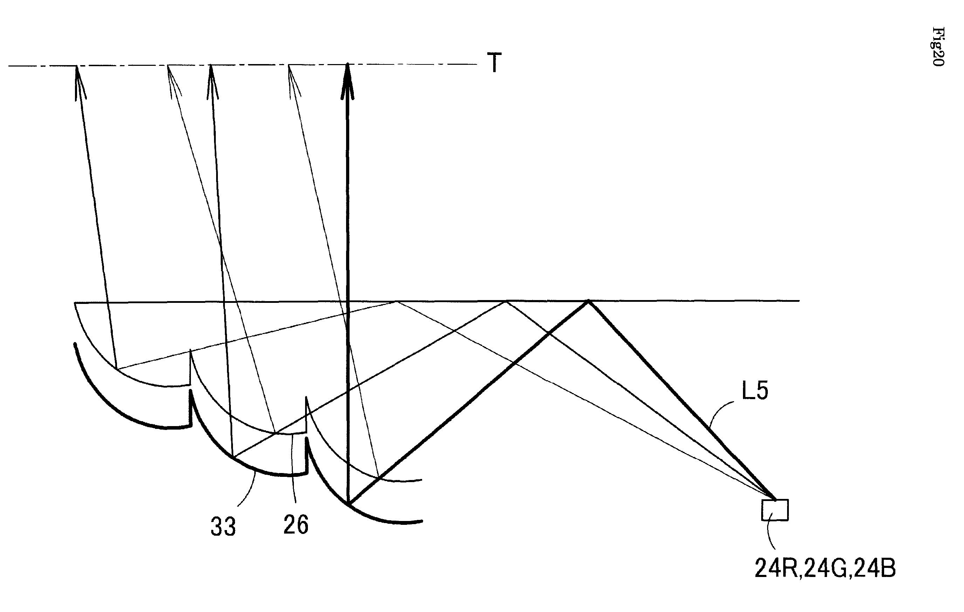

Thus, for a light emission source according to one or more embodiments of the present invention, as shown in Fig. 20, near the light emitters 24R, 24G, 24B, several % of the incident light quantity is reflected by the light reflection surface 26 of the light guide 22, and the remaining 80~90% of the incident light quantity is reflected by the light reflection surface 33 of the reflector 23. In contrast, further from the light emitters 24R, 24G, 24B, the incident light quantity is smaller, but the reflectance, due to total reflection by the light reflection surface 26 of the light guide 22, approaches 100%. Therefore, an advantage of the light emission source 21 according to one or more embodiments of the present invention is the prevention of the darkening of the edges due to decrease in the light quantity on the peripheral of the light emission source 21.

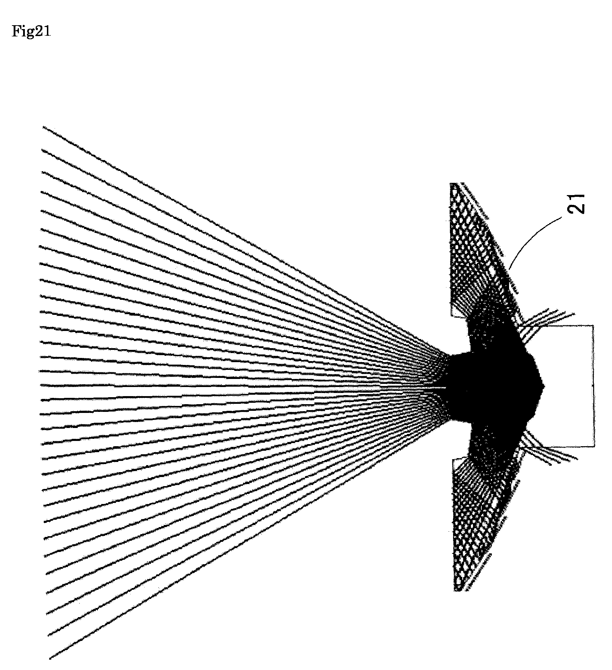

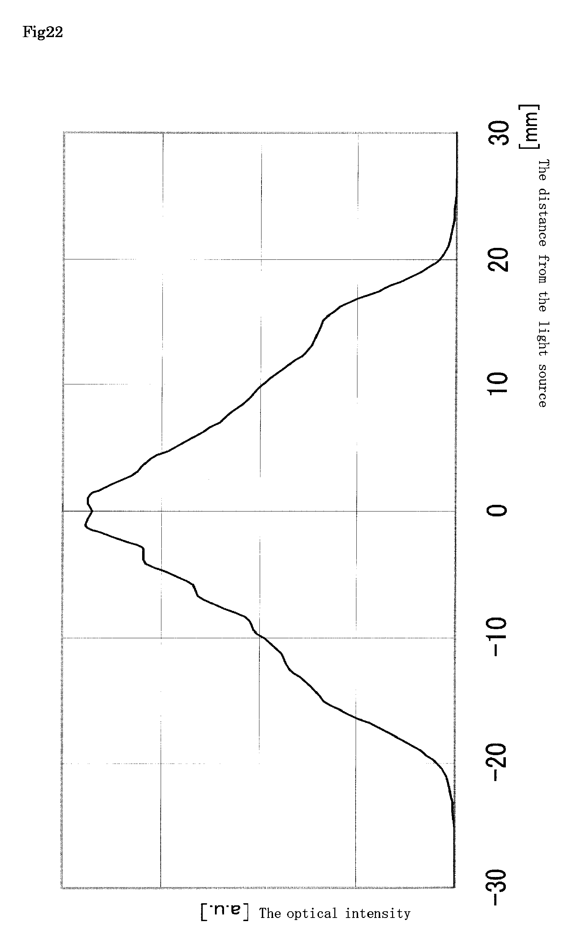

Next, results of simulations evaluating incident light characteristics of a light emission source 21 according to the first embodiment, having a diagonal size of 40 mm, wherein a light emitter is centrally disposed, is explained. Fig. 21 shows a diagonal cross-section view of the light emission source 21, and shows light beams emitted from the light emitters 24R, 24G, 24B without being reflected by the light reflection surfaces 26, 33, being directly emitted from the light emission light source 21. Fig. 22 shows the distribution of optical intensity of the directly emitted light upon illumination plane T set a predetermined distance from the light emission source 21.

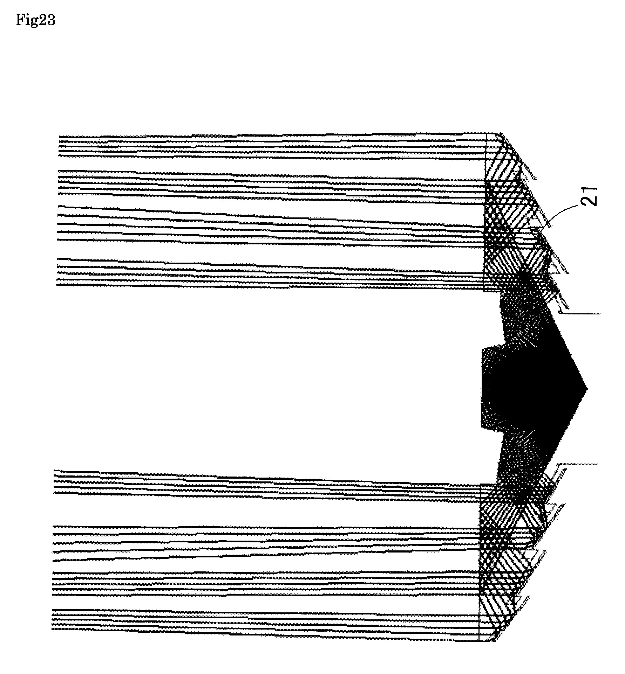

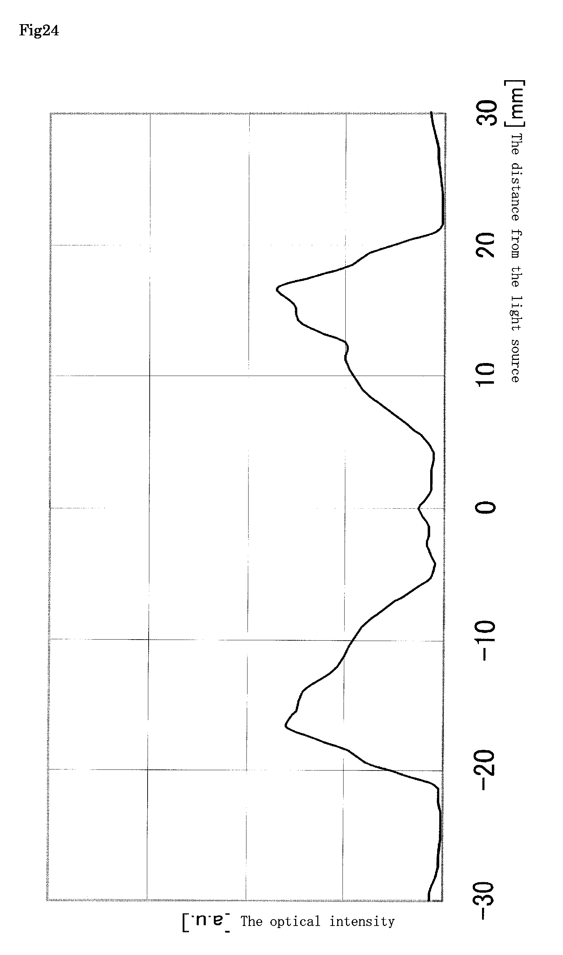

Fig. 23 shows a diagonal cross-section view of the light emission source 21, and shows light beams being regularly reflected by the light reflection surface 33 of the reflector 23, and then emitted from the light emission light source 21. Fig. 24 shows the distribution of optical intensity of the regularly reflected light upon illumination plane T set a predetermined distance from the light emission source 21.

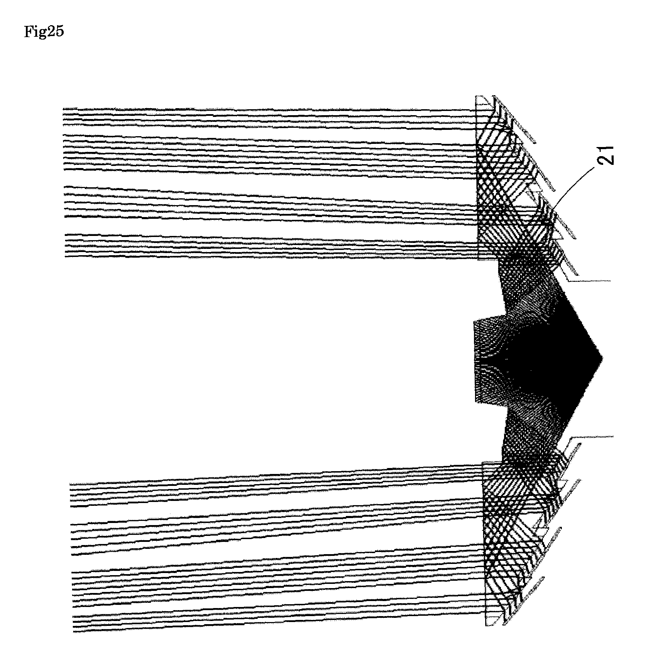

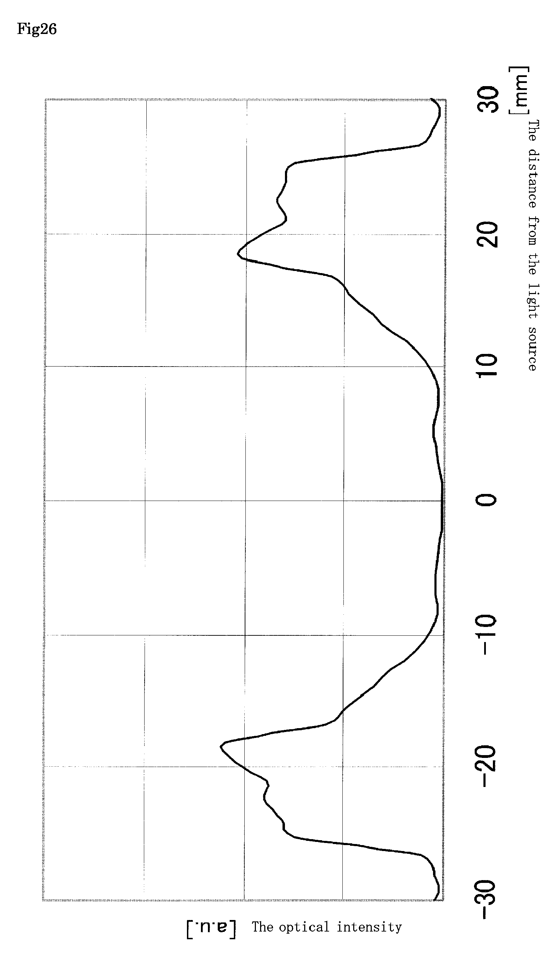

Fig. 25 shows a diagonal cross-section view of the light emission source 21, and shows light beams being Fresnel reflected (including total reflection) by the light reflection surface 26 of the light guide 22, and then emitted from the light emission light source 21. Fig. 26 shows the distribution of optical intensity of the Fresnel reflected light upon illumination plane T set a predetermined distance from the light emission source 21.

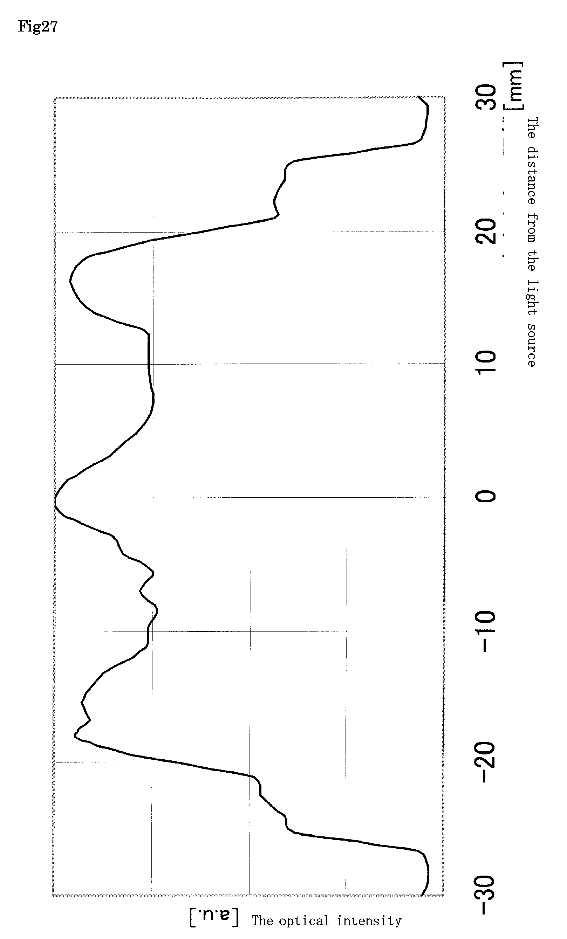

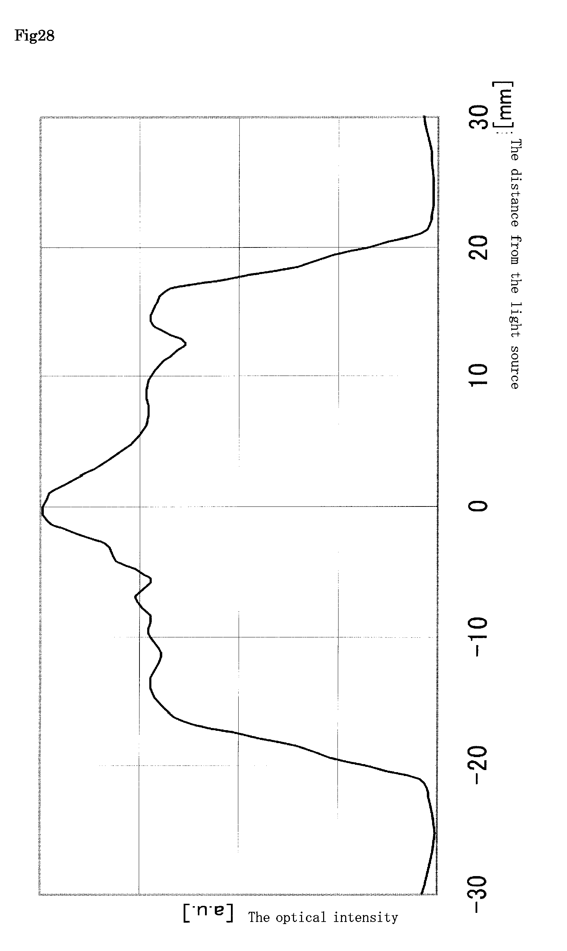

Fig. 27 shows the result of combining the optical intensity distributions of Figs. 22, 24, and 26. In other words, Fig. 27 shows an optical intensity distribution when direct emission, regular reflection, and Fresnel reflection are combined, and demonstrates an advantage of one or more embodiments of the present invention. On the other hand, Fig. 28 shows the result of combining the optical intensity distributions of Figs. 22 and 24. In other words, Fig. 28 shows an optical intensity distribution when direct emission and regular reflection are combined, and demonstrates characteristics of conventional light emission sources. In the characteristics of the conventional emission sources shown in Fig. 28, the optical intensity is high at the central region, while the optical intensity is low at the corner regions, and brightness inconsistencies are considerably great. In contrast, in the characteristics of one or more embodiments of the present invention shown in Fig. 27, the light intensity of the central region is suppressed, while the optical intensity is high at the corner regions, so that uniform optical intensity is seen throughout.

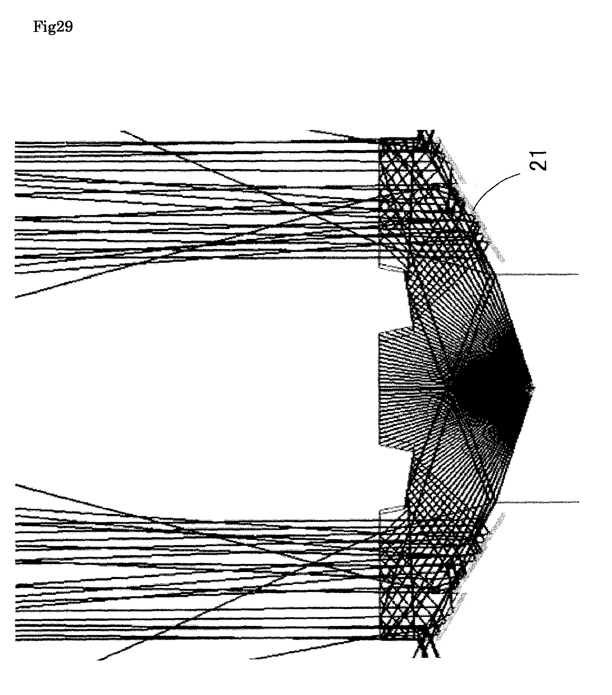

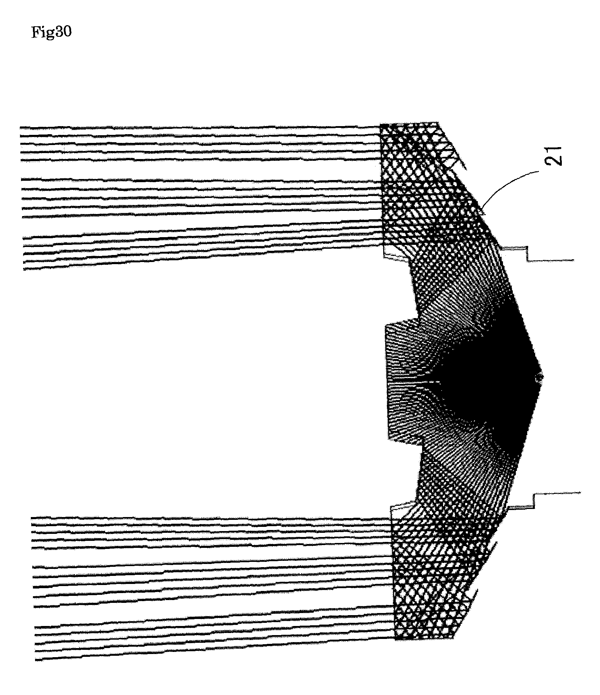

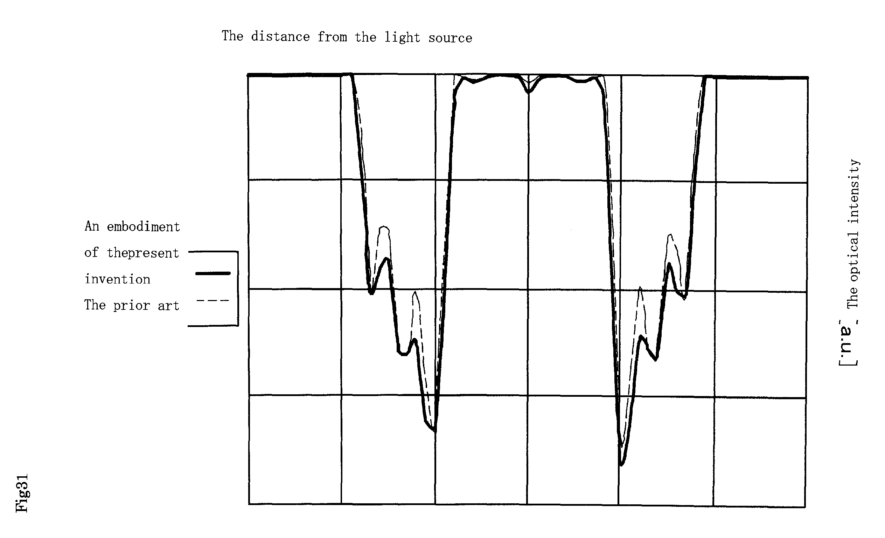

Fig. 29 shows a side cross-section view of the light emission source 21, and shows light that is regularly reflected by the light reflection surface 33 and light that is Fresnel reflected by the light reflection surface 26. Fig. 30 shows a side cross-section view of a conventional light reflection source, showing light that is regularly reflected. In the conventional example, as shown in Fig. 30, the direction of the emitted light is organized together. Therefore, like the optical intensity distribution shown in Fig. 31, the variation in optical intensity is large. In contrast, according to one or more embodiments of the present invention, the direction of emitted light is scattered. Therefore, like the optical intensity distribution shown in Fig. 31, the fluctuation is optical intensity about illumination plane T is smaller than the conventional example.

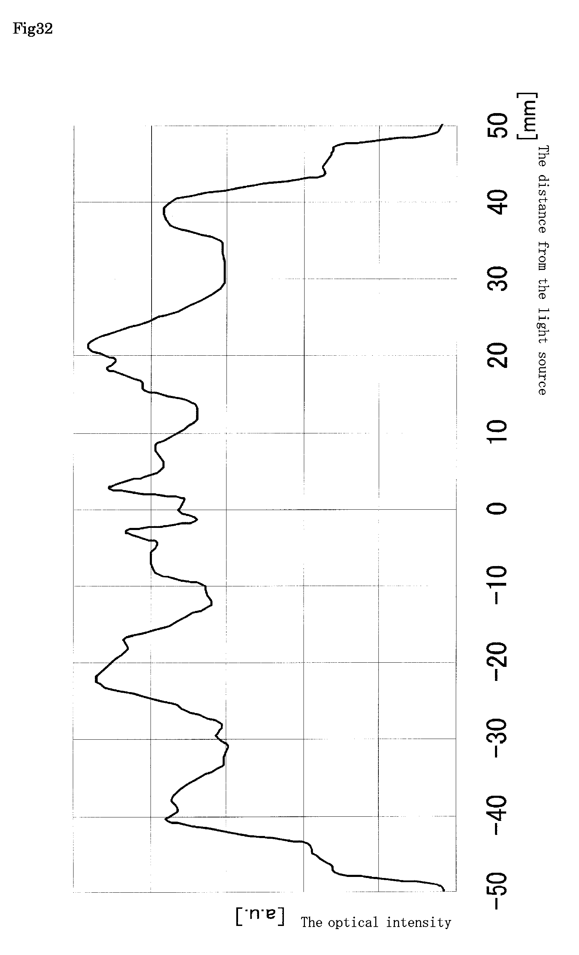

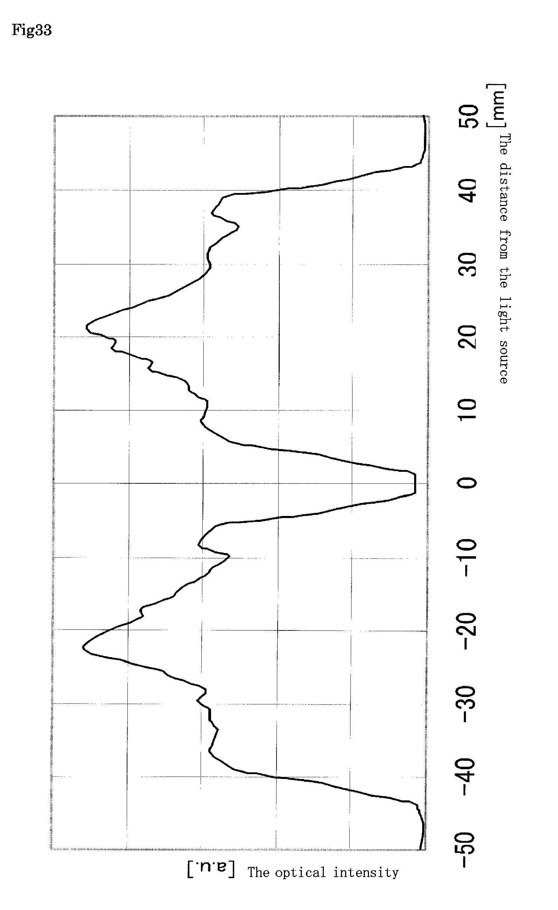

Figs. 32 and 33 show the simulation results of the light emission characteristics when two light emitting sources are lined up in the diagonal direction. Fig. 32 shows the results when considering direct emission, regular reflection, and Fresnel reflection, and corresponds to light emission characteristics of a light emission source according to one or more embodiments of the present invention. Fig. 33 shows the results when considering direct emission and regular reflection, and corresponds to light emission characteristics of a conventional light emission source. In the conventional example having only a single layer of light reflection surface, as shown in Fig. 33, at the part corresponding to the boundary portion between the light emission sources, the optical intensity is almost zero and is dark. In contrast, in light emission sources according to one or more embodiments of the present invention, as shown in Fig. 32, even at the boundary portion between the light emission sources, a uniform brightness is maintained.

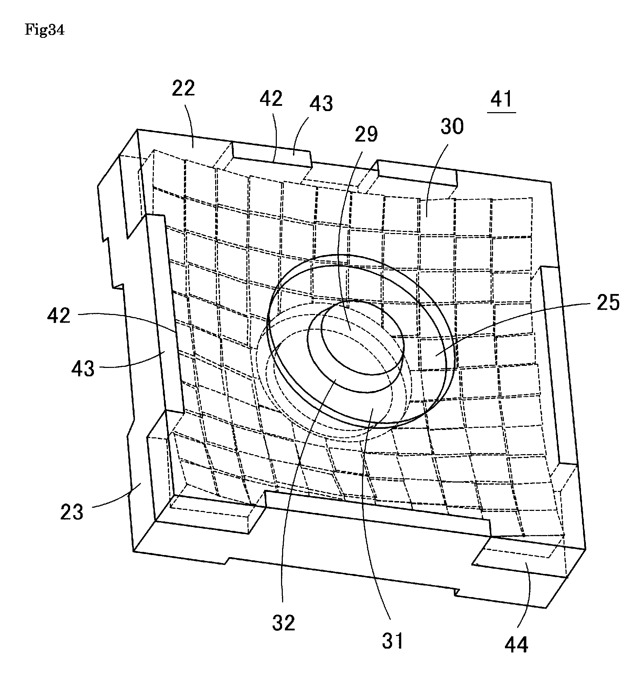

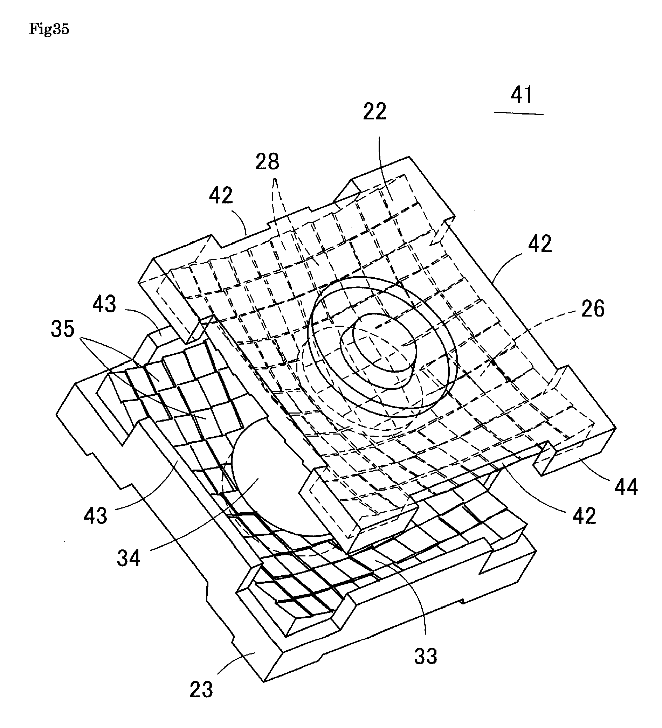

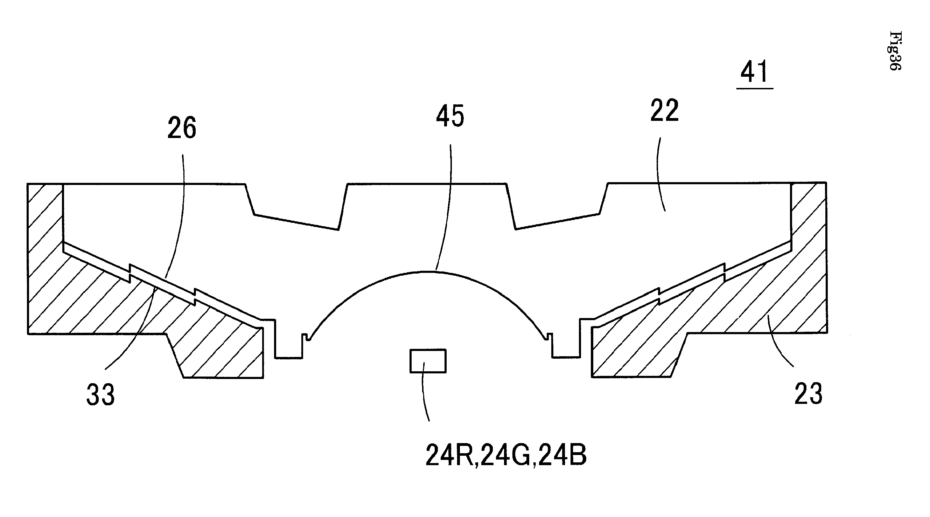

Fig. 34 shows a perspective view of a light emission source 41 according to a second embodiment of the invention. Fig. 35 shows a perspective view of a disassembled light emission source 41. Fig. 36 shows a cross-sectional view of the light emission source 41. In the second, notch portions 42 are disposed on the four sides of the light guide 22, and protrusions 43 are disposed on the front surface of the four sides of the reflector 23. The notch portions 42 and the protrusions 43 are engaged by stacking the light guide 22 and the reflector 23, thereby allowing mutual positioning of the light reflection surface 26 of the light guide 22 and the light reflection surface 33 of the reflector 23.

In the corner sections of the back side of the light guide 22 are disposed legs 44 protruding in the back side direction. By abutting the legs 44 with the front side of the reflector 23, the interval between the light reflection surface 26 of the light guide 22 and the light reflection surface 33 of the reflector 23 can be maintained at fixed value.

On the back side of the light guide 22 is formed a quasi-semispherical depression 45. By disposing light emitters 24R, 24G, 24B in the middle of the depression 45, light from each of the light emitters 24R, 24G, 24B can be efficiently introduced into the light guide 22.

Although in Fig. 36, the space between the light reflection surface 26 of the light guide 22 and the light reflection surface 33 of the reflector 23 is an air layer, in one or more embodiments, this space could also be filled with transparent resin having a refraction index smaller than that of light guide 22.

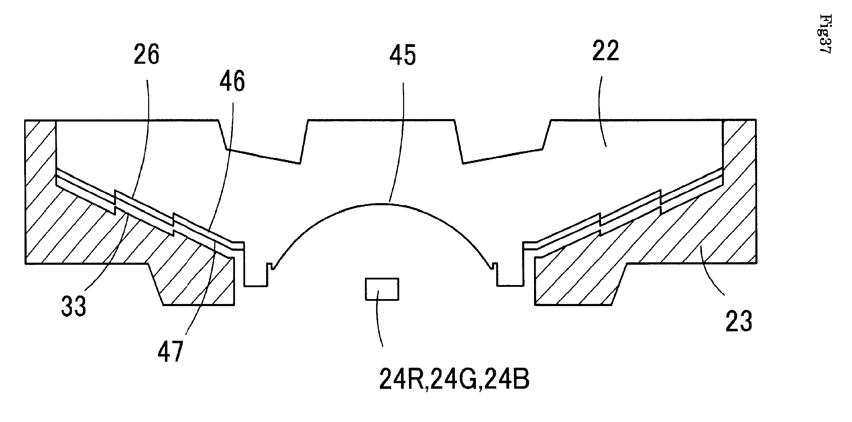

Fig. 37 shows an alternate embodiment of the light emission source 41 of the second embodiment in which the light reflection surface 26 of the light guide 22 is covered with a transparent film 46 having a refraction index between that of the light guide 22 and of air. According to this embodiment, because the boundary between the film and air becomes a third reflection surface 47 which reflects some incident light and transmit the remaining light, it allows for reflection of light using three layers of light reflection surfaces 26, 47, 33. By combining the reflected light from these layers, it is possible to obtain more uniform characteristics.

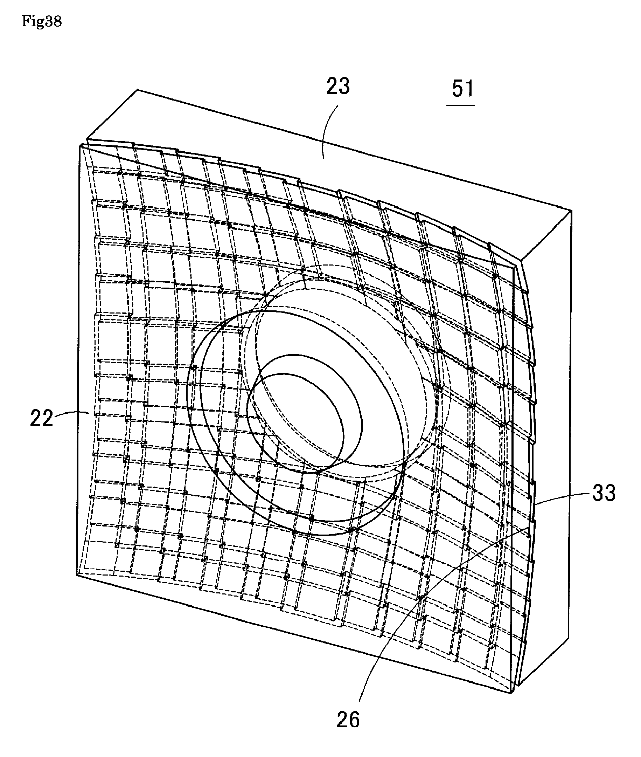

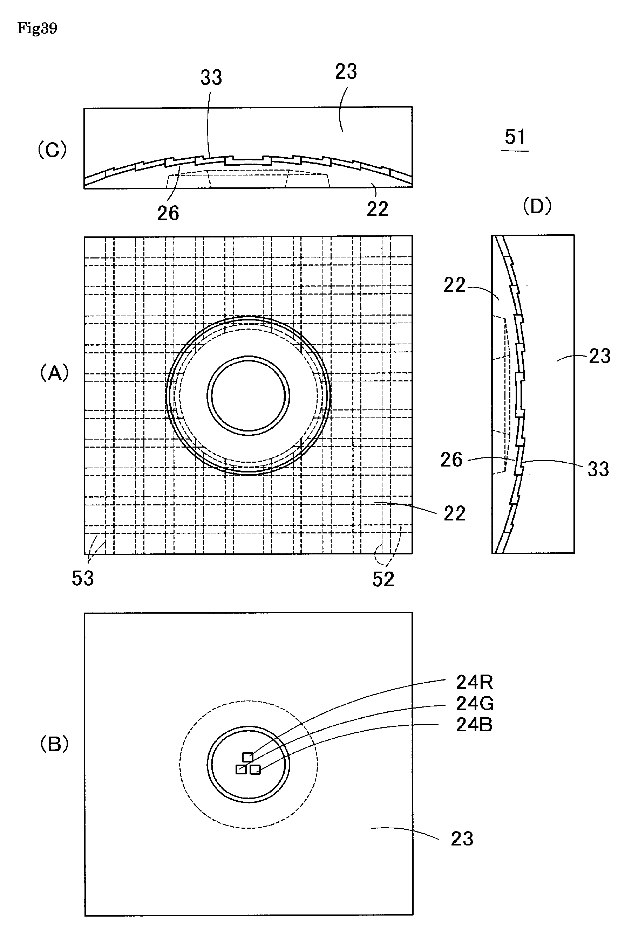

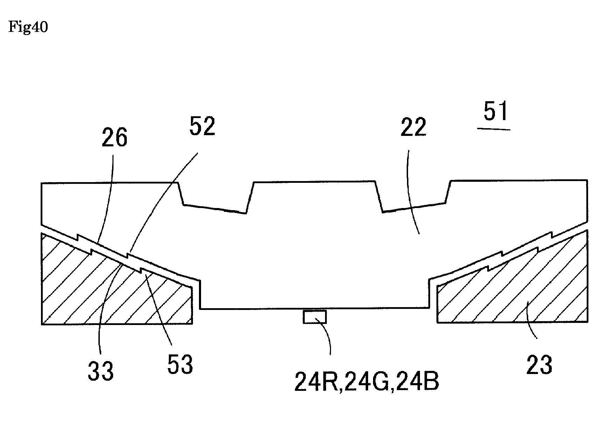

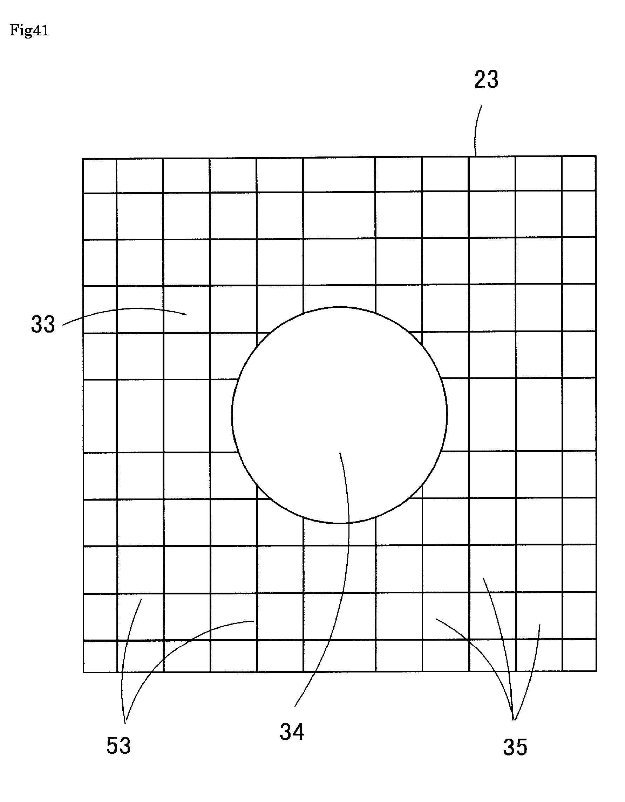

Fig. 38 shows a perspective view of a light emission source 51 according to a third embodiment of the invention. Figs. 39A, 39B, 39C, and 39D respectively show a front view, a back view, a top view, and a side view of the light emission source 51. Fig. 40 shows a cross-sectional view of light emission source 51. Fig. 41 shows a front view of reflector 23. The light emission source 51 has a similar structure as light emission source 21 of the first embodiment, but unlike the light emission source 21 in which each of the patterns of the light reflection surface 26 of the light guide 22 and the light reflection surface 33 of the reflector 23 are disposed at the same positions, in the light emission source 51, the two light reflection surfaces 26, 33 are offset with respect to each other. The light guide 22 used in the light emission source 51 is similar to the one described in the first embodiment, but the light reflection surface 33 of the reflector 23 is different. In the light emission source 21, the pattern of the light reflection surface 33, like the light reflection surface 26, was arranged with a fixed pitch. However, in the reflector 23 of the light emission source 51, as shown in Fig. 41, by making reflection region 35 wider at the central portions of each side, the pattern of the light reflecting member 33 is offset from the light reflection member 26. Accordingly, a step 52 of the light reflection surface 26 and a step 53 of the light reflection surface 33 are also offset with respect to each other.

Because the patterns of the light reflection surface 26 of the light guide 22 and the light reflection surface 33 of the reflector 23 are offset, it is possible to further vary the direction of light reflected by the light reflection surface 26 and light reflected by the light reflection surface 33, allowing emitted light to be further random and uniform. Furthermore, by offsetting the pattern of the light reflection surface 26 and the pattern of the light reflection surface 33, the steps between the reflection regions become less noticeable.

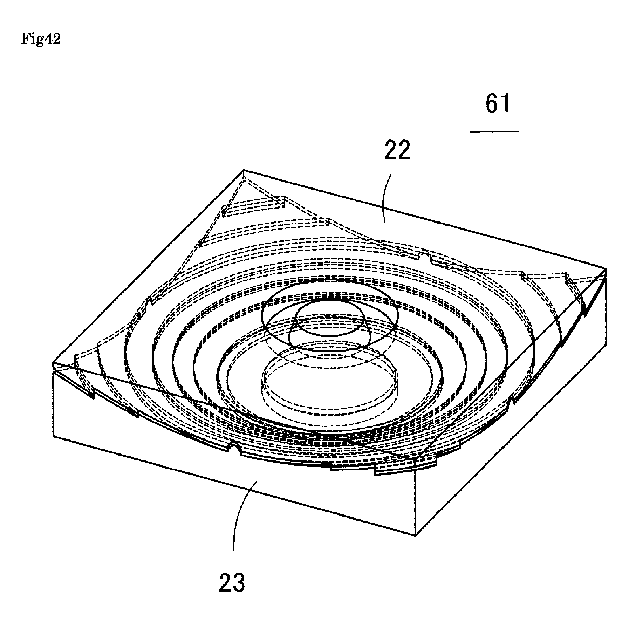

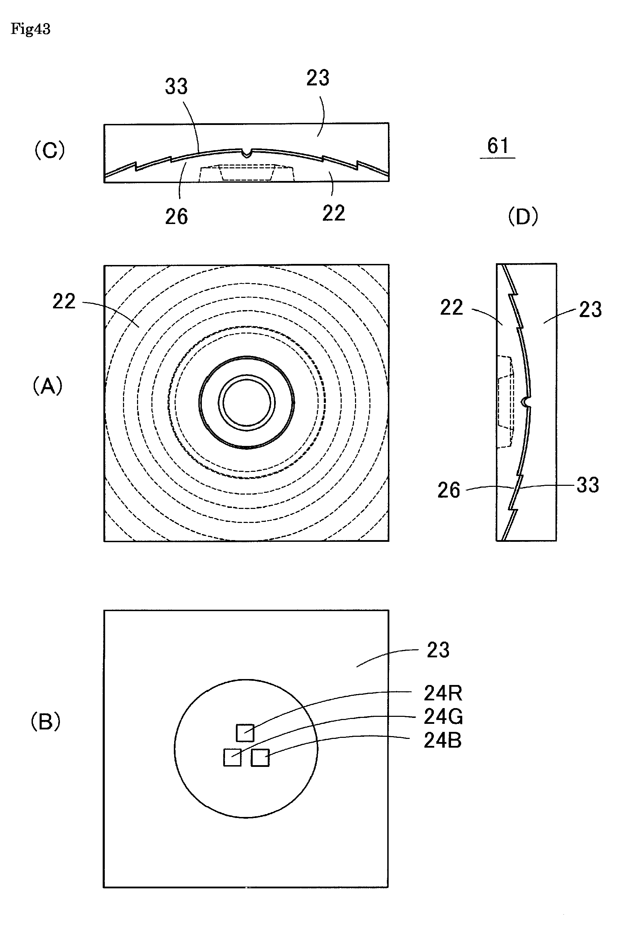

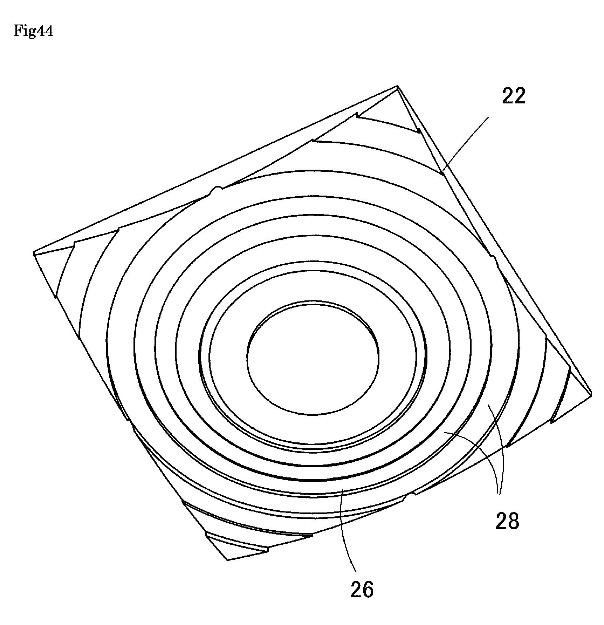

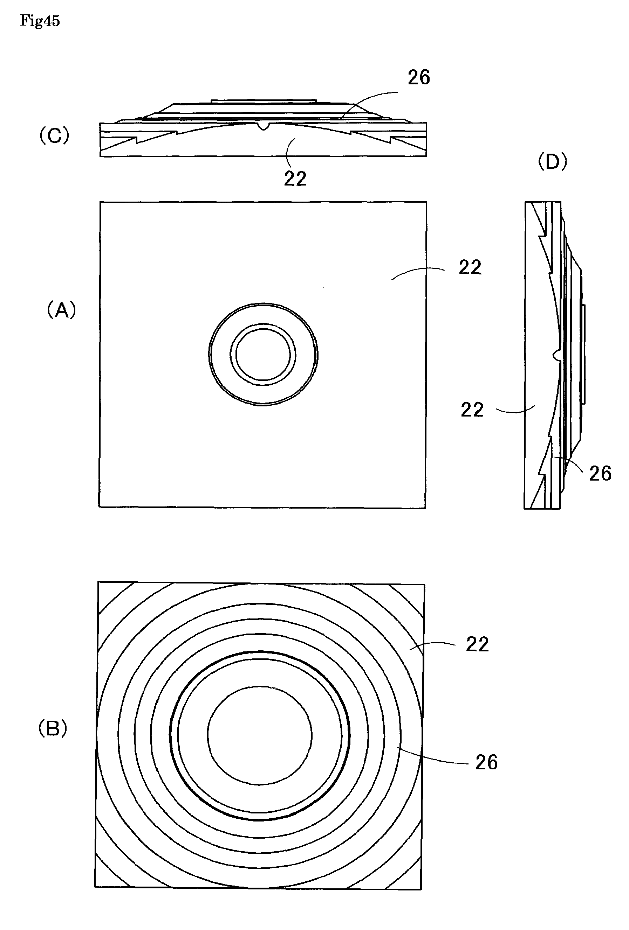

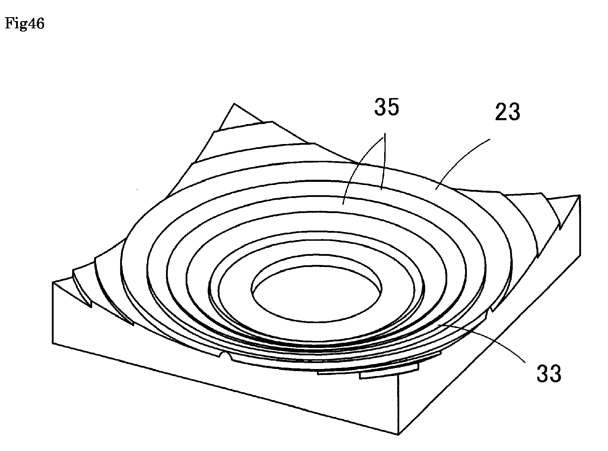

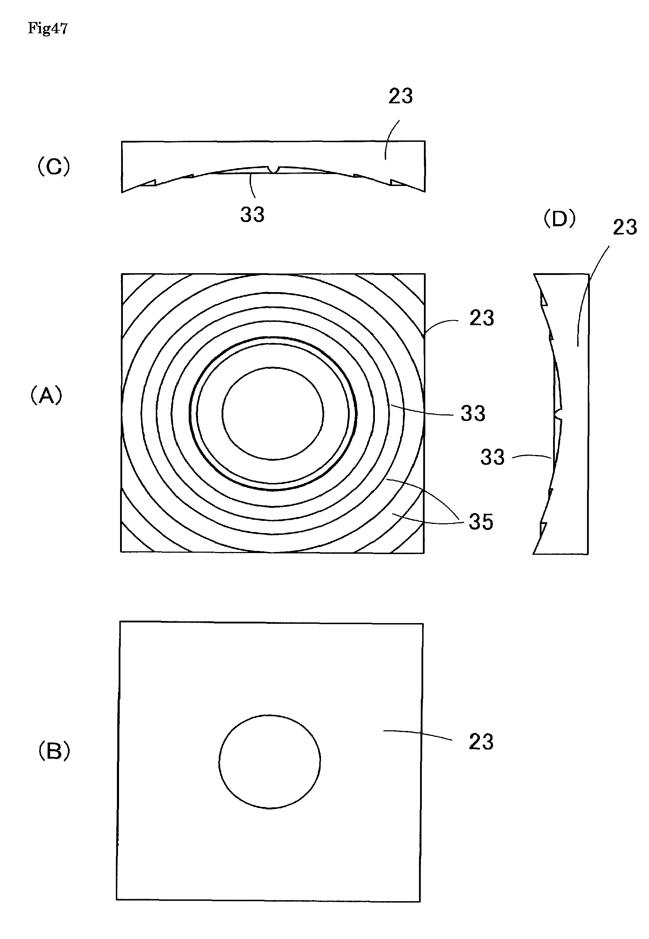

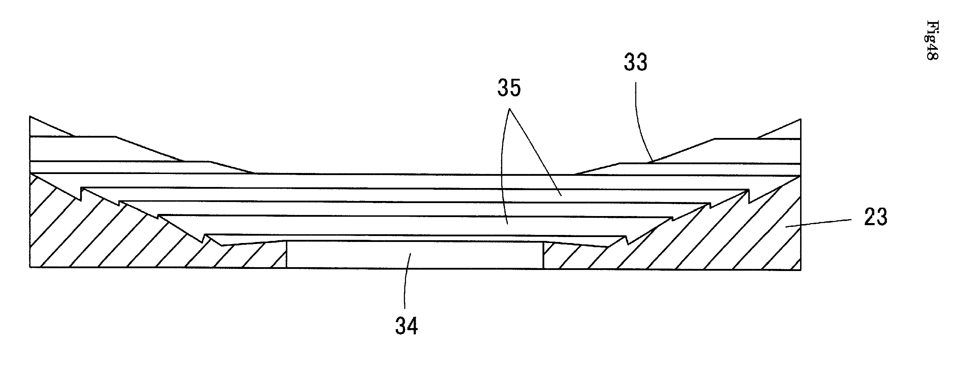

Fig. 42 shows a perspective view of a light emission source 61 according to a fourth embodiment of the present invention. Figs. 43A, 43B, 43C, and 43D respectively show a front view, a back view, a top view, and a side view of the light emission source 61. Fig. 44 shows a back perspective view of a light guide 22 of the light emission source 61. Figs. 45A, 45B, 45C, and 45D respectively show a front view, a back view, a top view, and a side view of the light guide 22. Fig. 46 shows a perspective view of a reflector 23 of the light emission source 61. Figs. 47A, 47B, 47C, and 47D respectively show a front view, a back view, a top view, and a side view of the reflector 23. Fig. 48 shows a cross-sectional view of the reflector 23.

The light emission source 61 has the feature that the light reflection surface 26 of the light guide 22 and the light reflection surface 33 of the reflector 23 are each constructed of reflection regions 28, 35 concentrically arranged ring shapes.

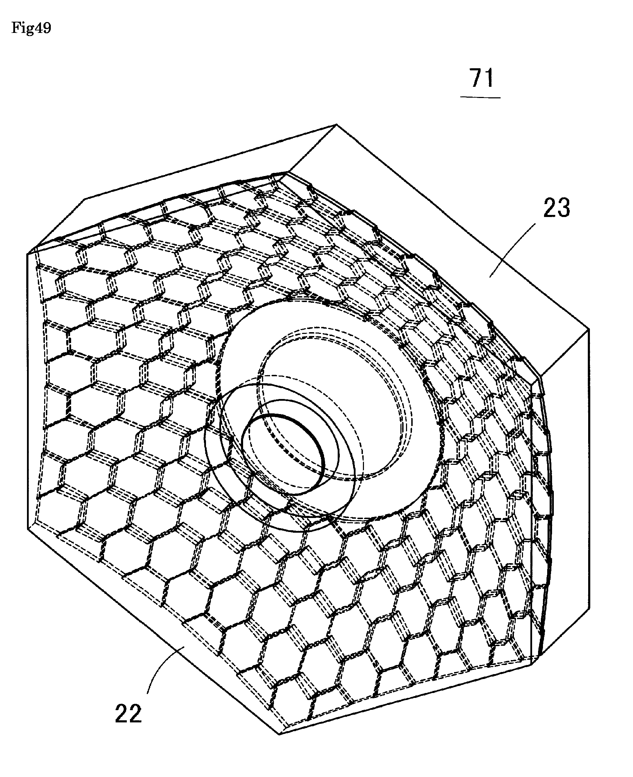

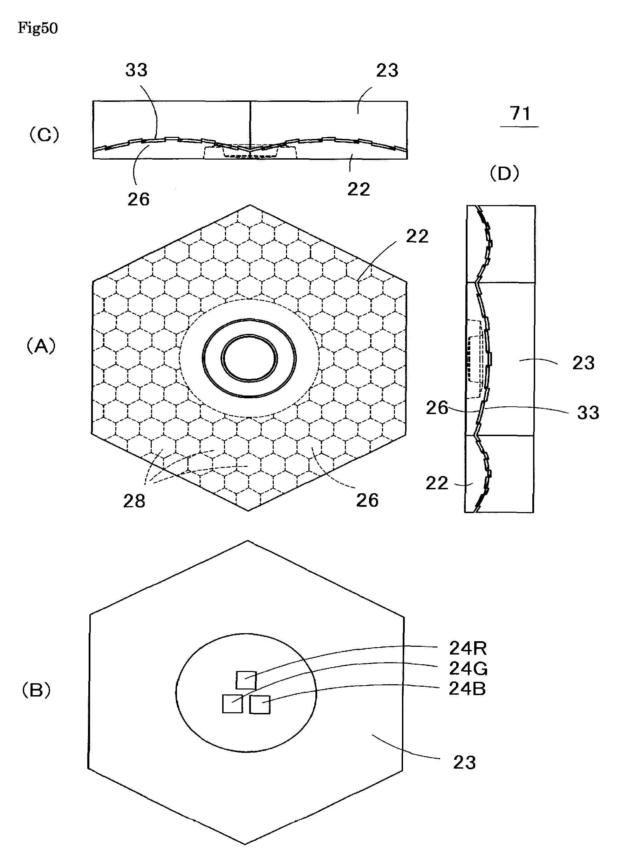

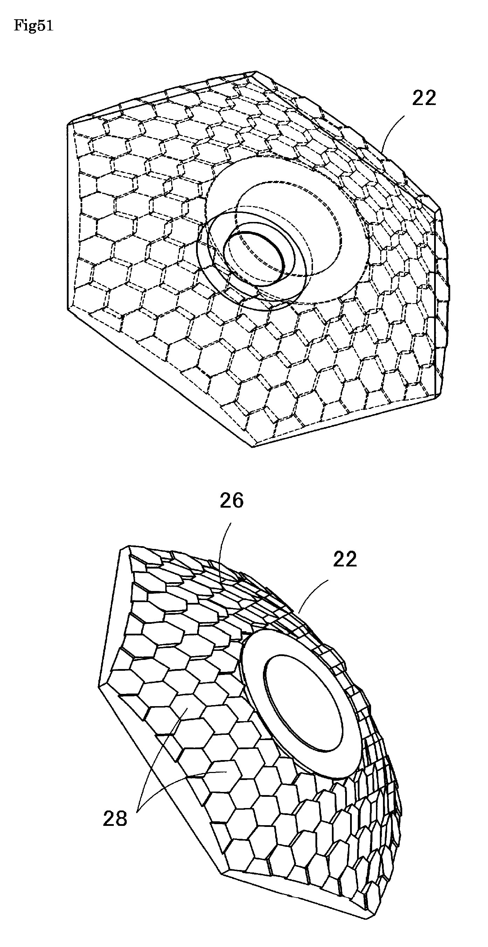

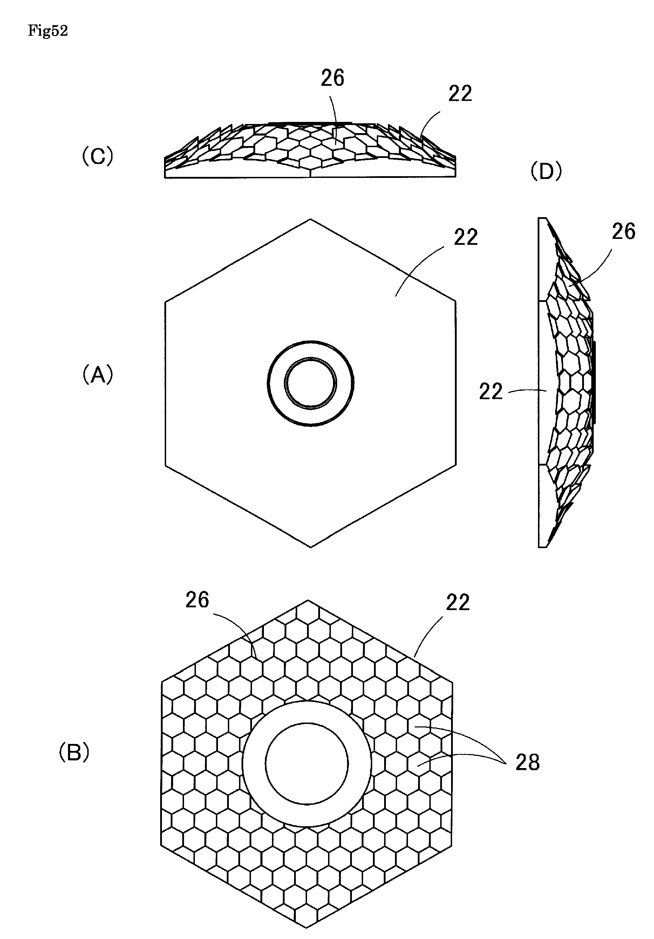

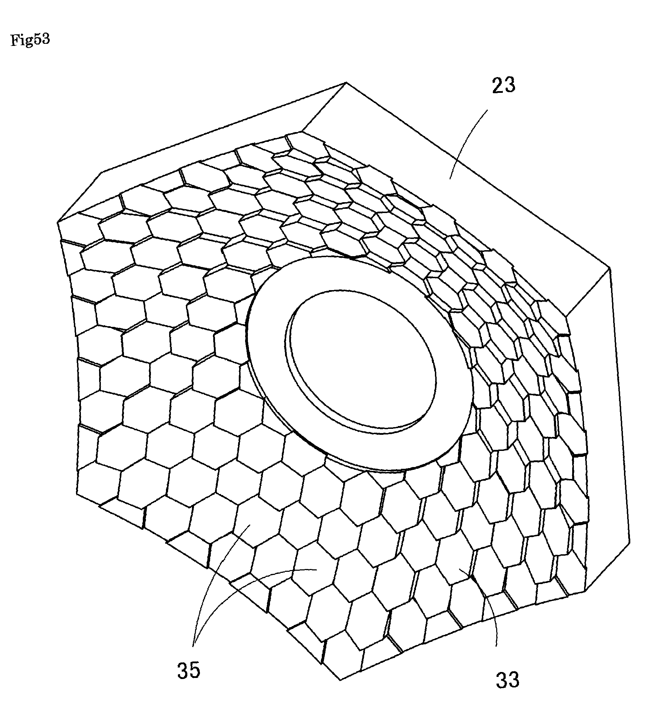

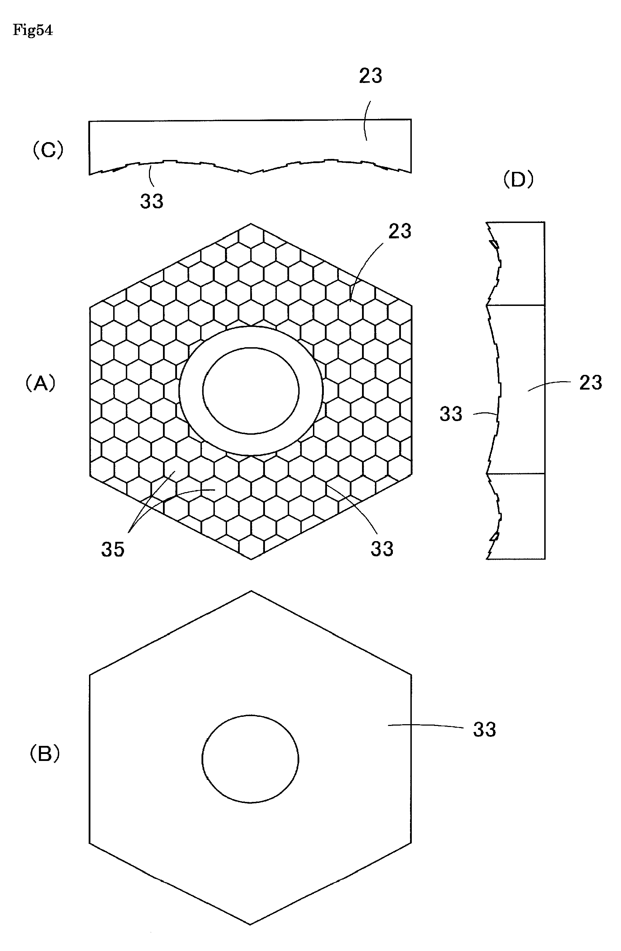

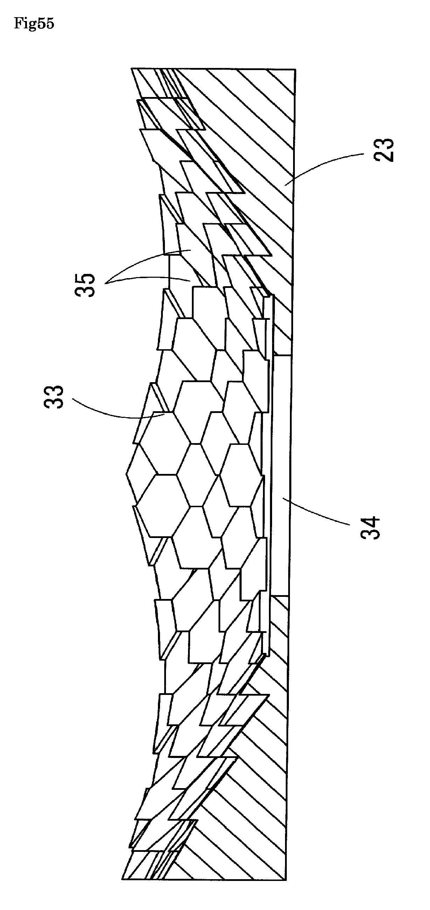

Fig. 49 shows a perspective view of a light emission source 71 according to a fifth embodiment of the invention. Figs. 50A, 50B, 50C, and 50D respectively show a front view, a back view, a top view, and a side view of the light emission source 71. Figs. 51A and 51B show respectively front and back perspective views of a light guide 22 of the light emission source 71. Figs. 52A, 52B, 52C, and 52D respectively show a front view, a back view, a top view, and a side view of the light guide 22. Fig. 53 shows a perspective view of a reflector 23 of the light emission source 71 according to the fifth embodiment. Figs. 54A, 54B, 54C, and 54D respectively show a front view, a back view, a top view, and a side view of the reflector 23. Fig. 55 shows a cross-sectional view of the reflector 23.

The light emission source 71 has the feature that its external shape, that is, the external shapes of the light guide 22 and the reflector 23, when seen from the front, is a hexagon. Further, each reflection region 28 that make up the light reflection surface 26 of the light guide 22 is also hexagon-shaped, and each reflection region 35 that make up the light reflection surface 33 of the reflector 23 is also hexagon-shaped.

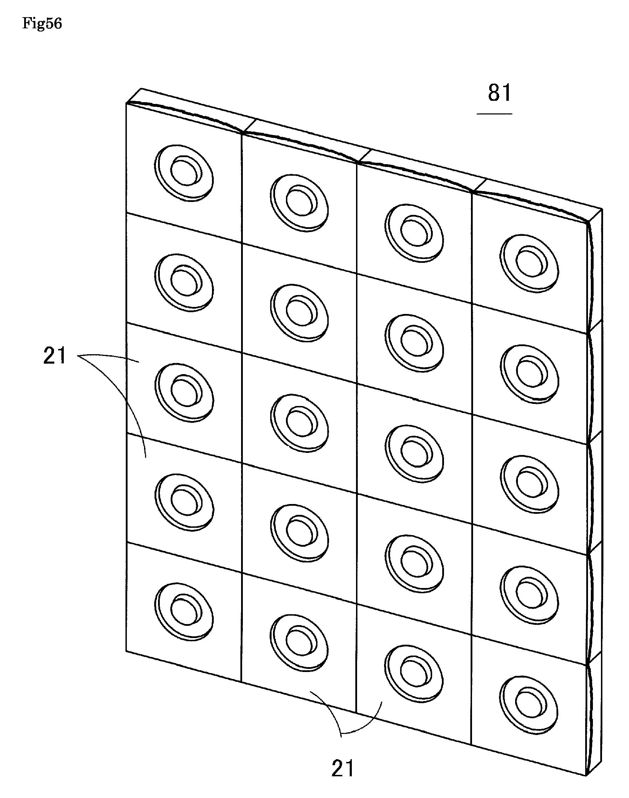

Fig. 56 shows a perspective view of a light emission source array 81 according to a sixth embodiment of the invention. The light emission source array 81 may have, for example, a plurality of rectangular light emission sources 21 arranged vertically and horizontally. By arranging a plurality of light emission sources into a light emission source array 81, a larger area light source could be constructed. Further, in a light emission source array 81 according to one or more embodiments of the invention, as explained previously with reference to Fig. 32, the boundary portion between the light emission sources are less likely to darken, and a light emission source array 81 with a large area and uniform brightness can be obtained.

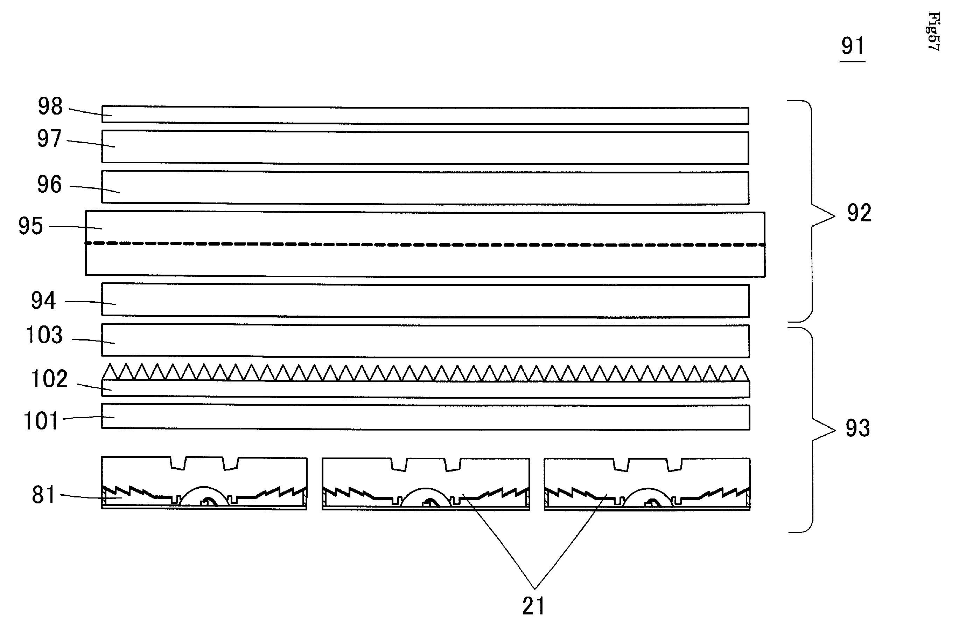

Fig. 57 shows a schematic cross-sectional view of the structure of a liquid crystal display ("LCD") 91 according to a seventh embodiment of the invention. The LCD 91 has a liquid crystal panel 92, on the back of which is disposed a backlight 93. The liquid crystal panel 92 is conventional, and configured to include, sequentially, a polarization board 94, a liquid crystal cell 95, a phase contrast board 96, polarization board 97, and anti-reflection film 98 laminated from the back side.

Backlight 93 includes a plurality of light emission sources 21 arranged as a light emission source array 81, a light diffusion film 101, prism sheet 102, and brightness improvement film 103. The light emission sources 21 are formed as a square shape seen from the front, and the light emission source array 81 is configured to have approximately a hundred or several hundred light emission sources 21 arranged in a checker board pattern. The light diffusion film 101, by diffusing light emitted from the light emission source array 81, has the function of making the brightness uniform, as well as uniformly mixing each color light emitted from the light emission source array 81. The prism sheet 102 is for refracting or internally reflecting diagonal incident light and thereby bending light in a direction perpendicular to the prism sheet 102 and transmitting the perpendicular light. In this way, the front brightness of the back light 93 can be improved.

The brightness improvement sheet 103 is a film for transmitting linear polarized light of polarized light plane while reflecting linear polarized light of a polarized light plane orthogonal thereto, and has the function of improving the use efficiency of light emitted from the light emission source array 81. That is, the brightness improvement film 103 is disposed such that the polarized light plane of the transmitted light matches the polarized light plane of the polarization board 94 used in the liquid crystal panel 92. Accordingly, of the light emitted from the light emission source array 81, the light for which the polarized light plane and the polarization board 94 match is transmitted through the brightness improvement film 103 and is incident inside the liquid crystal panel 92, while the light for which the polarized light plane and the polarization board 94 are orthogonal is reflected by the brightness improvement film 103 and returned, reflected by the light emission source array 81, then again incident on the brightness improvement film 103. The light returned after being reflected by the brightness improvement film 103, by the time it is reflected by the light emission source array 81 and again incident on brightness improvement film 103, has a polarized light plane which is rotated. Thus, a portion thereof is transmitted through the brightness improvement film 103. By repeating an operation such as this, a large portion of the light emitted from the light emission source array 81 is used b the liquid crystal panel 92, and the brightness of liquid panel 92 improves.

In a LCD 91 according to one or more embodiments of the invention, it is possible to display an excellent picture without color or brightness inconsistencies.

## Claims

1. A light emission source comprising:
a reflector,
a first light reflecting surface disposed on the reflector,
a light guide disposed on the side of the reflector with the first light reflection surface, and
a light emitter for emitting light towards the light guide, wherein the light guide comprises:
a second light reflection surface disposed facing the first light reflection surface for reflecting some light and transmitting remaining light, and
a light emission surface disposed on an opposite side of the second light reflection surface on the light guide for transmitting light emitted from the light emitter, light reflected by the first light reflection surface, and light reflected by the second light reflection surface.

2. The light emission source according to claim 1, wherein the first reflection surface and the second light reflection surface each comprise a plurality of reflective regions divided by steps.

3. The light emission source according to claim 2, wherein the second light reflection surface is shaped to reflect light towards regions lacking in light reflected by the first light reflection surface due to steps on the first light reflection surface.

4. The light emission source according to claim 1, wherein the first light reflection surface and the second light reflection surface have identical patterns.

5. The light emission source according to claim 4, wherein the first light reflection surface and the second light reflection surface are disposed such that the patterns are horizontally offset with respect to each other.

6. The light emission source according to claim 1, wherein the first light reflection surface and the second light reflection surface have different patterns.

7. The light emission source according to claim 1, further comprising a third light reflection surface disposed between the first light reflection surface and the second light reflection surface for reflecting some light and transmitting remaining light.

8. The light emission source according to claim 1, wherein a space between the first light reflection surface and the second light reflection surface is filled with a medium having a smaller refractive index than the light guide.

9. A light emission source comprising:
a light guide, the light guide comprising:
a light emitter,
a first light reflection surface for reflecting light emitted from the light emitter, and
a light emission surface for transmitting light emitted from the light emitter, and light reflected by the first light reflection surface, wherein
the first light reflection surface comprises two types of reflection surfaces, the two types of reflection surfaces comprising a partial reflection surface for reflecting some light and transmitting remaining light, and a high reflectance reflection surface for reflecting nearly all light.

10. A light emission source array comprising a plurality of the light emission sources according to claim 1.

11. A light emission source array comprising a plurality of the light emission sources according to claim 9.

12. A backlight comprising a plurality of the light emission sources according to claim 1 arranged in a common plane.

13. A backlight comprising a plurality of the light emission sources according to claim 9 arranged in a common plane.

14. A liquid crystal display apparatus comprising the light emission source array according to claim 10, and a liquid crystal display panel disposed facing the light emission source array.

15. A liquid crystal display apparatus comprising the light emission source array according to claim 11, and a liquid crystal display panel disposed facing the light emission source array.

16. A light emission method using a light emission source, the light emission source comprising:
a reflector,
a light guide disposed on a reflective side of the reflector, and
a light emitter for emitting light towards the light guide, wherein
a surface of the light guide facing the reflector reflects some of the light emitted by the light emitter, and transmits the remaining light,
a light reflection surface on the reflector reflects the light transmitted through the light guide, and
the light emitted by the light emitter, the light reflected by the surface of the light guide facing the reflector, and the light reflected by the light reflection surface on the reflector are emitted towards the outside of the light emission source.
